# EUROPEAN PATENT SPECIFICATION

(11) **EP 4 067 686 B1**
(45) Date of publication and mention of the grant of the patent: **14.05.2025**
(21) Application number: 22155114.6
(22) Date of filing: 04.02.2022
(51) Int. Cl.: F16D 65/12

(54) **WHEEL WITH BRAKE DISC AND BRAKE DISC**
RAD MIT BREMSSCHEIBE UND BREMSSCHEIBE
ROUE DOTÉE D'UN DISQUE DE FREIN ET DISQUE DE FREIN

(30) Priority: 02.04.2021 JP 2021063624
(43) Date of publication of application: 05.10.2022
(73) Proprietor: Nabtesco Corporation, Tokyo (JP)
(72) Inventor: Cappellini, Stefano, Chiyoda-ku, Tokyo (JP)
(74) Representative: Grünecker Patent- und Rechtsanwälte PartG mbB

(56) References cited:
- DE-A1- 2 315 134
- DE-A1- 4 325 934
- DE-B- 1 031 337
- DE-U- 6 609 470

## Description

### Field of the Invention

The present invention relates to a wheel with brake disc and a brake disc.

### Background Art

A ventilated brake disc comprising a pair of disc bodies that are spaced apart from each other is known as a brake disc for a disc brake gear. A ventilated brake disc having heat radiating pins is disclosed in WO2016/058792, for example.

Patent Document 1: WO2016/058792

Other examples of ventilated brake discs are shown in documents DE 66 09 470U, DE 23 15 134A1 and DE 45 25 934A1.

It is required to facilitate an operation for fastening a pair of disc bodies to a wheel.

### Summary of the Invention

The present invention has been made in view of such circumstances. The object of the present invention is to provide a brake disc in which an operation for fastening a pair of disc bodies to a wheel is easy.

A brake disc according to the present invention comprises the features of claim 1. Additionally a wheel with brake disc according to the present invention comprises the features according to claim 2.

In the wheel with brake disc according to the present invention,
the first positioning unit may have a base part having the same height as that of the heat radiating members in the height direction of the heat radiating members, and a first positioning projection or a first positioning recess formed on or in a distal end surface of the base part; and
the second positioning unit has a second positioning recess which is engaged with the first positioning projection or a second positioning projection which is engaged with the first positioning recess.

In the wheel with brake disc according to the present invention,
the first positioning unit may project more than the heat radiating members in the height direction of the heat radiating members; and
the second positioning recess with which the first positioning unit is engaged may be formed in the second positioning unit.

In the wheel with brake disc according to the present invention,
the first positioning unit provided on one of the pair of disc bodies and the first positioning unit provided on the other may differ from each other in position, in a rotation axis direction of the wheel.

In the wheel with brake disc according to the present invention, the first positioning unit and the second positioning unit may form a bolt through-hole into which a bolt is inserted, the bolt being configured to penetrate the wheel and the pair of disc bodies to fasten the pair of disc bodies with the wheel therebetween.

In the wheel with brake disc according to the present invention,
at least one of the first positioning unit and the second positioning unit may have an inclined surface inclined in an insertion direction of the bolt.

In the wheel with brake disc according to the present invention,
the pair of disc bodies may be fastened to each other by the bolt, and a nut screwed on a shaft part of the bolt;
one and the other of the pair of disc bodies may have the same shape with each other;
the bolt through-hole may have a first through-hole that is formed in one of the pair of disc bodies and is partially provided with a restriction wall that restricts rotation of the nut, and a second through-hole that is formed in the other of the pair of disc bodies and is partially provided with a bolt accommodation wall that rotatably accommodates a head part of the bolt;
the first through-hole and the second through-hole may be alternately formed in each of the pair of disc bodies on a circumference about a rotation axis of the wheel; and
the first through-hole may be formed in the first positioning unit in both of the pair of disc bodies, or the second through-hole is formed in the first positioning unit in both of the pair of disc bodies.

In the wheel with brake disc according to the present invention,
a contact surface between the first positioning unit and the second positioning unit may define an angle 75° or more and 105° or less with respect to the rotation direction of the wheel.

The present invention can facilitate an operation for fastening a pair of disc bodies to a wheel.

### Brief Description of the Drawings

Fig. 1 is a front view of a brake disc according to this embodiment, in a state where a pair of disc bodies are fastened to a wheel.
Fig. 2 is a perspective view partially showing the brake disc shown in Fig. 1.
Fig. 3 is a perspective view of a first disc body according to this embodiment.
Fig. 4 is an enlarged sectional view partially showing the pair of disc bodies and the wheel along a line C-C of Fig. 1.
Fig. 5 is an enlarged front view showing a nut and its environment of Fig. 1.
Fig. 6 is an enlarged front view showing a head part of a bolt and its environment of Fig. 1.
Fig. 7 is a view showing positions of first through-holes and second through-holes in the pair of disc bodies.
Fig. 8 is a perspective view showing the first disc body in this embodiment.
Fig. 9 is an enlarged view showing a first positioning unit in this embodiment.
Fig. 10 is a perspective view showing the wheel in this embodiment.
Fig. 11 is an enlarged view showing a second positioning unit in this embodiment.
Fig. 12 is a view showing positions of the second positioning units and wheel through-holes of the wheel.
Fig. 13 is a view showing a fastening operation of the pair of disc bodies to the wheel in this embodiment.
Fig. 14 is a view showing the fastening operation of the pair of disc bodies to the wheel in this embodiment.
Fig. 15 is a sectional view showing the first through-hole in a modification example 1.
Fig. 16 is a sectional view showing the first through-hole in a modification example 2.
Fig. 17 is a sectional view showing the first positioning unit and the second positioning unit in a modification example 3.
Fig. 18 is a sectional view showing the first positioning unit and the second positioning unit in a modification example 4.
Fig. 19 is a view showing a positional relationship between the first positioning units and the through-holes in a modification example 5.
Fig. 20 is a view showing positions of the first through-holes and the second through-holes in a modification example 6.

### Detailed Description of the Invention

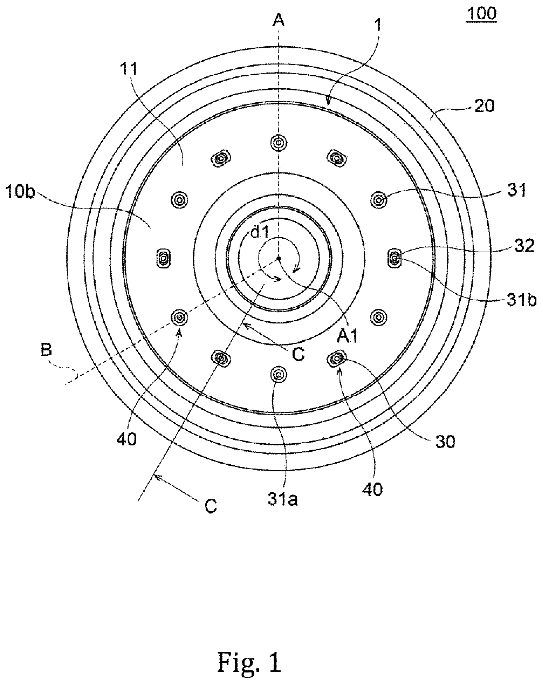

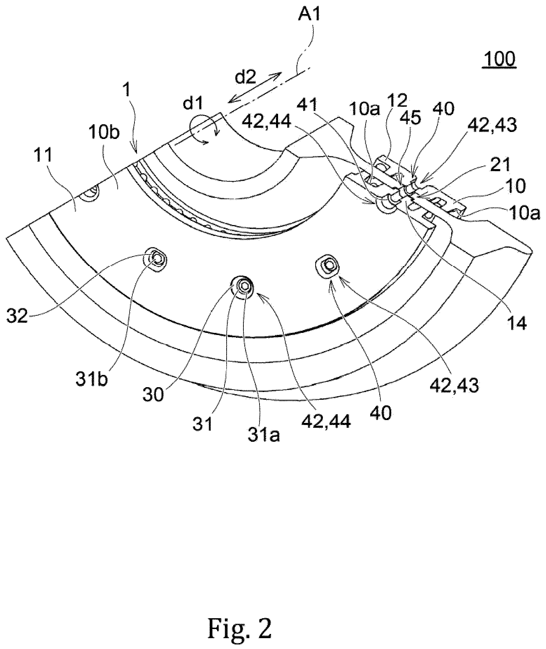

An embodiment of the present invention is described in detail with reference to the drawings. Fig. 1 is a front view of a brake disc 1 seen from a rotation axis direction d2 described below, in a state where a pair of disc bodies 10 are fastened to a wheel 20. In the example shown in Fig. 1, the pair of disc bodies 10 are fastened to the wheel 20, so that a wheel with brake disc 100 including the wheel 20 and the pair of disc bodies 10 is formed. Fig. 2 is a perspective view partially showing the brake disc 1 in a sector form, the brake disc 1 being cut along a broken line A and a broke line B in Fig. 1.

In order to clarify a directional relationship among the drawings, a rotation direction d1 of the wheel 20, a rotation axis direction d2 thereof, and a radial direction d3 thereof are shown by arrows in some drawings, which are directions common to the drawings. In the drawings showing components constituting the brake disc 1 and the wheel with brake disc 100, a direction in which the wheel with brake disc 100 are formed, i.e., the pair of disc bodies 10 are fastened to the wheel 20 is shown.

The brake disc 1 according to this embodiment comprises a pair of disc bodies 10. In the example shown in Figs. 1 and 2, the pair of disc bodies 10 sandwich therebetween a wheel 20. The pair of disc bodies 10 can be fastened by a fastening member 30 described below, with the wheel 20 therebetween. The pair of disc bodies 10 are fastened to each other with the wheel 20 therebetween, and are also fastened to the wheel 20. In the example shown in Figs. 1 and 2, the pair of disc bodies 10 are fastened to each other by a fastening member 30, with the wheel 20 therebetween.

In a state where the pair of disc bodies 10 are fastened to the wheel 20, the wheel 20 and the brake disc 1 are rotated in a rotation direction d1 about a rotation axis A1 which is shown by a point in Fig. 1 and by one-dot chain lines in Fig. 2. A direction along which the rotation axis A1 extends is also referred to as rotation axis direction d2.

In the example shown in Figs. 1 and 2, the fastening member 30 includes a bolt 31 that fastens the pair of disc bodies 10 to each other, with the wheel 20 therebetween. In particular, the fastening member 30 includes the bolt 31 having a head part 31a and a shaft part 31b extending from the head part 31a, and a nut 32 to be engaged with the shaft part 31b of the bolt 31. The pair of disc bodies 10 can be fastened to each other by the bolt 31 and the nut 32 screwed to the shaft part 31b of the bolt 31.

The wheel 20 and the pair of disc bodies 10 form bolt through-hole 40 penetrating through the wheel 20 and the pair of disc bodies 10. The pair of disc bodies 10 are fastened to each other with the wheel 20 therebetween, by inserting the bolt 31 into the bolt through-hole 40. In particular, the pair of disc bodies 10 can be fastened to each other with the wheel 20 therebetween, by inserting the bolt 31 through the bolt through-hole 40 and then by engaging the nut 32 with the shaft part 31b. In the example shown in Figs. 1 and 2, the bolt through-hole 40 extend in the rotation axis direction d2.

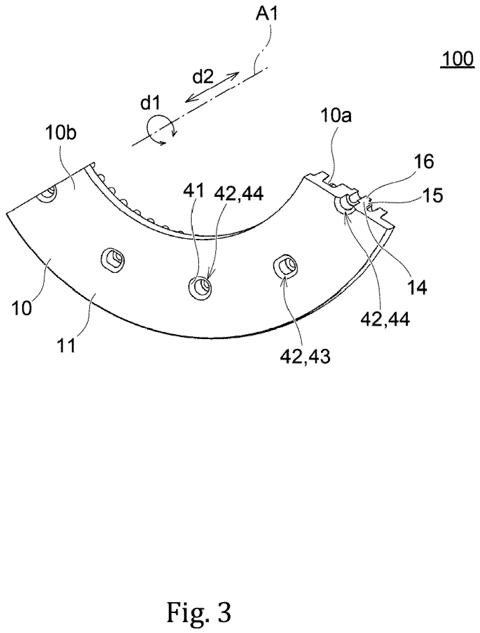

The pair of disc bodies 10 are described. In this embodiment, the pair of disc bodies 10 have the same shape with each other. Herebelow, one of the pair of disc bodies 10, which is shown on the front side in Fig. 2, is referred to also as first disc body 11. In addition, the other of the pair of disc bodies 10, which is shown on the rear side in Fig. 2, is referred to also as second disc body 12. Fig. 3 is a perspective view of the first disc body 11 seen from the side of a contact surface 10b described below. Fig. 3 shows a portion corresponding to the portion of the first disc body 11 shown in Fig. 2.

Each of the pair of disc bodies 10 has a substantially discoid shape having a hole in its center. In addition, each of the pair of disc bodies 10 has an inner surface 10a which is located on the wheel 20 side in a state where the disc bodies 10 are fastened to the wheel 20, and a contact surface 10b located oppositely to the inner surface 10a as principal surfaces. The contact surface 10b contacts a brake pad, not shown, to brake the rotation of the wheel 20. For example, a pair of brake pads are controlled by a brake caliper, not shown, to move toward and away from the respective contact surfaces 10b of the pair of disc bodies 10. In this case, one of the pair of brake pads controlled by the brake caliper comes into contact with one contact surface 10b of the pair of disc bodies 10, and the other of the pair of brake pads comes into contact with the other contact surface 10b of the pair of disc bodies 10. Thus, the pair of brake pads apply a braking force caused by a frictional force to the pair of disc bodies 10. Then, the braking force is transmitted from the pair of disc bodies 10 to the wheel 20, so that the rotation of the wheel 20 is braked.

Each of the contact surfaces 10b of the pair of disc bodies 10 is provided with a through wall 41 forming a through-hole 42. As shown in Fig. 3, each of the contact surfaces 10b is provided with a plurality of the through walls 41 forming the through-holes 42. As shown in Fig. 2, in a state where the pair of disc bodies 10 are fastened to the wheel 20, a plurality of the through-holes 42 formed in one (e.g., first disc body 11) of the first disc bodies 10 and a plurality of the through-holes 42 formed in the other (e.g., second disc body 12) of the pair of disc bodies 10 overlap with each other in the rotation axis direction d2. In addition, the through-holes 42 formed in the pair of disc bodies 10 also overlap below-described wheel through-holes 45 formed in the wheel 20 in the rotation axis direction d2. When the through-hole 42 of the one of the pair of disc bodies 10, the wheel through-hole 45 of the wheel 20, and the through-hole 42 of the other disc body 10 overlap with one another in the rotation axis direction d2, the bolt through-hole 40 is formed.

When the though holes 42 of the pair of disc bodies 10 overlap with each other in the rotation axis direction d2, the bolt through-hole 42 is formed. When the pair of disc bodies 10 are fastened to each other by means of the bolt 31 and the nut 32, the through-hole 42 in which the nut 32 is disposed is referred to as first through-hole 43. In addition, the through-hole 42 in which the head part 31a of the bolt 31 is disposed is referred to as second through-hole 44.

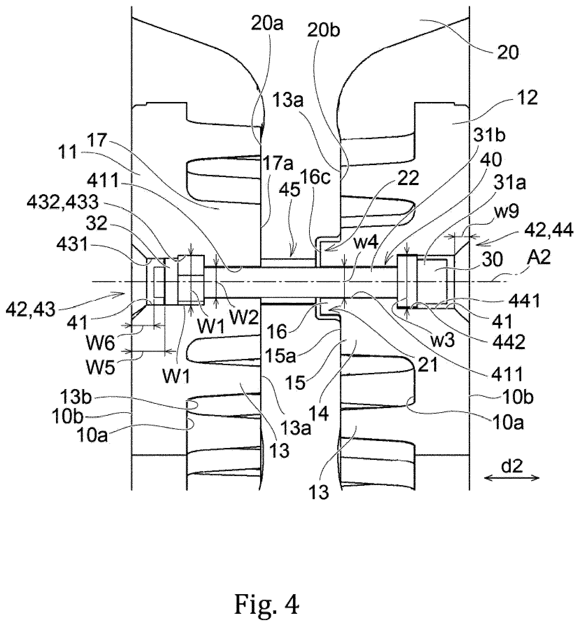

Fig. 4 is an enlarged sectional view partially showing the pair of disc bodies 10 and the wheel 20 along a line C-C of Fig. 1. In Fig. 4, the fastening member 30 is shown not in a section but in a plan view seen from a direction perpendicular to the section. As shown in Fig. 4, each through wall 41 has a shaft-part accommodation wall 411 that accommodates the shaft part 31b of the bolt 31. The through wall 41, which is located on the side where the nut 32 is disposed to form the first through-hole 43, has the shaft-part accommodation wall 411 and a first larger-diameter wall 431. A hole diameter w1 of a part of the first through-hole 43 where the first larger-diameter wall 431 is formed is larger than a hole diameter w2 of a part of the first through-hole 43 where the shaft-part accommodation wall 411 is formed. A part of the first larger-diameter wall 431 forms a restriction wall 432 described later. As shown in Fig. 4, the restriction wall 432 functions as a nut accommodation wall 433 that accommodates the nut 32, in a state where the pair of disc bodies 10 are fastened to the wheel 20. The restriction wall 432 (nut accommodation wall 433) restrict the rotation of the nut 32 disposed so as to be surrounded by the restriction wall 432. In the example shown in Fig. 4, the first through-hole 43 accommodates a part of the shaft part 31b of the bolt 31 so that the part is surrounded by the shaft-part accommodation wall 411, and also accommodates the nut 32 so that the nut 32 is surrounded by the restriction wall 432 (nut accommodation wall 433). The restriction wall 432 (nut accommodation wall 433) and the shaft-part accommodation wall 411, which form the first through-hole 43, are continuously formed such that the restriction wall 432 (nut accommodation wall 433) is located nearer than the shaft-part accommodation wall 411 to the contact surface 10b of the disc body 10 in which the first through-hole 43 is formed. Note that a hole diameter of a hole, such as the through-hole 42, means a width of the hole in a perpendicular direction perpendicular to the direction along which the hole extends. When a width of the hole in the perpendicular direction is not constant, a hole diameter means a minimum width of the hole in the perpendicular direction.

The second through-hole 44 includes a shaft-part accommodation wall 411 and a second larger-diameter wall 441. A hole diameter w3 of a part of the second through-hole 44 where the second larger-diameter wall 441 is formed is larger than a hole diameter w4 of a part of the second through-hole 44 where the shaft-part accommodation wall 411 is formed. A part of the second larger-diameter wall 441 forms a bolt restriction wall 442. In the example shown in Fig. 4, the second through-hole 44 accommodates a part of the shaft part 31b of the bolt 31 so that the part is surrounded by the shaft-part accommodation wall 411, and also accommodates the head 31a of the bolt 31 so that the head 31a is surrounded by the bolt accommodation wall 442. The bolt accommodation wall 442 and the shaft-accommodation wall 411, which form the second through-hole 44, are continuously formed such that the bolt accommodation wall 442 is located nearer than the shaft-part accommodation wall 411 to the contact surface 10b of the disc body 10 in which the second through-hole 44 is formed.

The restriction wall 432 is described. The through wall 41 provided on one of the pair of disc bodies 10 is partially provided with the restriction wall 432 that restricts the rotation of the nut 32. The restriction wall 432 restricts the nut 32 from rotating together with the rotation of the bolt 31 when the pair of disc bodies 10 are fastened to the wheel 20. When the pair of disc bodies 10 are fastened to the wheel 20, the bolt 31 is rotated about an axis line A2 that passes a center of the shaft part 31b to extend in a direction along which the shaft part 31b extends. The restriction wall 432 restricts the rotation of the nut 32 such that the nut 32 is not rotated together with the rotation of the bolt 31 about the axis line A2. The shaft part 31b of the bolt 31 extends parallel to the rotation axis direction d2. In the example shown in Fig. 4, each of the bolt through-holes 40 includes the first through-hole 43 formed in one of the pair of disc bodies 10, and the second through-hole 44 formed in the other of the pair of disc bodies 10. The restriction wall 432 is provided partially on the first larger-diameter wall 431 of the through wall 41 forming the first through-hole 43.

An example of how the restriction wall 42 restricts the rotation of the nut 32 is described. When the pair of disc bodies 10 are fastened to the wheel 20 to make the brake disc 1 in this embodiment, the following operation is performed. The nut 32 is firstly disposed so as to be surrounded by the restriction wall 432 of the first through-hole 43 of the bolt through-hole 40. Then, the shaft part 31b of the bolt 31 is inserted from the second through-hole 44, and the bolt 31 is rotated with respect to the nut 32. The nut 32 is engaged with the shaft part 31b by the above operation, so that the pair of disc bodies 10 are fastened to the wheel 20.

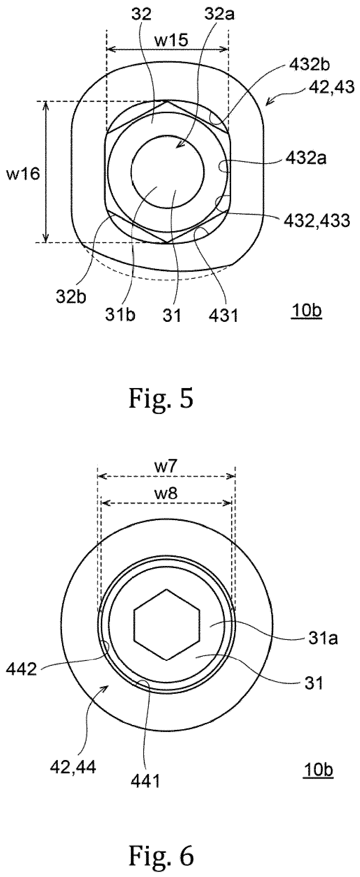

The nut 32 has a polygonal columnar shape, for example. Fig. 5 is an enlarged front view showing the nut 32 and its environment of the front view of Fig. 1. In the example shown in Fig. 5, the nut 32 has a polygonal columnar shape, in particular, a hexagonal columnar shape, having a hole part 32a engageable with the shaft part 31b of the bolt 31.

The restriction wall 432 of the first through-hole 43 in this embodiment is provided so as to be in surface-contact with at least one of side surfaces 32b of the polygonal columnar nut 32. Since the side surface 32b of the nut 32 is in surface-contact with the restriction wall 432, the nut 32 can be prevented from rotating together with the rotation of the bolt 31 when the bolt 31 is rotated with respect to the nut 32 so as to engage the nut 32 with the shaft part 31b.

Thus, the restriction walls 432 can prevent rotation of the nut 32 together with the rotation of the bolt 31. In particular, when the restriction wall 432 is in surface-contact with at least one of the side surfaces 32b of the polygonal columnar nut 32, the rotation of the nut 32 can be effectively prevented. In the example shown in Fig. 5, the two side surfaces 32b of the hexagonal columnar nut 32 are in surface-contact with the restriction walls 432.

In addition, as shown in Fig. 5, a part of the first through-hole 43 where the restriction walls 432 are provided in the direction in which the shaft part 31b of the bolt 31 extends has a minimum width w15. The minimum width w15 is smaller than a maximum width w16 of the nut 43 in the direction in which the shaft part 31 of the bolt 31 extends. This structure also restricts the rotation of the nut 32.

The restriction wall 432 (nut accommodation wall 433) is located in the first through-hole 43 so as to be spaced apart from the contact surface 10b at a distance more than a maximum allowable wear amount of each of the pair of disc bodies 10. The maximum allowable wear amount means a thickness of the disc body 10 in the rotation axis direction d2, which can be reduced because the contact surface 10b is worn by a brake pad that comes into contact therewith. In other words, in a state where the pair of disc bodies 10 are fastened to the wheel 20, a distance w5 between the restriction wall 432 (nut accommodation wall 433) which is a part for accommodating the nut 32 and the contact surface 10b of the disc body 10 in which the first through-hole 43 is formed is larger than the maximum allowable wear amount (see Fig. 4). Thus, even when the disc body 10 is worn by the maximum allowable wear amount, the nut 32 can be prevented from contacting the brake pad.

In addition, in a state where the pair of disc bodies 10 are fastened to the wheel 20, a distance w6 between the contact surface 10b of the disc body 10 in which the first through-hole 43 is formed and the shaft part 31b of the bolt 31 is larger than the maximum allowable wear amount (see Fig. 4).

An example of a definition of the maximum allowable wear amount is described. In order thereto, suppose that the disc body 10 is formed of a layered body including a first layer forming the contact surface 10b, and a second layer stacked on the first layer oppositely to the side where the contact surface 10b is formed. The first layer is a layer that is allowed to be worn by the use of the brake disc 1. The second layer is a layer that is not allowed to be worn by the use of the brake disc 1. In this case, the maximum allowable wear amount can be defined as a thickness of the first layer in the rotation axis direction d2.

The maximum allowable wear amount can also be defined as the distance between the contact surface 10b and the position closest to the wheel 20 among the positions where the surface of the brake pad that comes into contact with the contact surface 10b can move according to specifications of the brake caliper comprising the brake pad.

In the example shown in Fig. 5, when seen from the rotation axis direction d2, the restriction wall 432 has a profile including a pair of straight portions 432a that are parallel to each other, and a pair of curved portions 432b connecting the pair of straight portions 432a. Each of the pair of curved portions 432b is a substantially arcuate curved line. The restriction wall 432 having such a shape can be easily formed in the disc body 10 by the following method, for example. A hole is firstly formed in the disc body 10 such that a hole diameter of the hole corresponds to a hole diameter of a part in which the shaft-part accommodation wall 411 of the first through-hole 43 is formed. Then, an end mill is brought into contact with the contact surface 10b of the disc body 10 to form the first larger-diameter wall 431 including the restriction wall 432. At this time, the aforementioned restriction wall 432, which has a profile including a pair of straight portions 432a that are parallel to each other, and a pair of curved portions 432b connecting the pair of straight portions 432a, when seen from the rotation axis direction d2, can be formed by only an operation of bringing the end mill into contact with the contact surface 10b of the disc body 10 and moving it in only one direction.

The bolt accommodation wall 442 is described. In this embodiment, the restriction wall 432 is provided on a part of the through wall 41 provided in one of the pair of disc bodies 10. The through wall 41, which is provided in the other of the pair of disc bodies 10 and is not provided with the restriction wall 432, is partially provided with the bolt accommodation wall 442 that rotatably accommodates the head part 31a of the bolt 31. The through-hole 44 provided with the bolt accommodation wall 442 forms the second through-hole 44. In the example shown in Fig. 4, each of the bolt through-holes 40 includes the first through-hole 43 that is formed in one of the pair of disc bodies 10, and the second through-hole 44 that is formed in the other of the pair of disc bodies 10. The bolt accommodation wall 442 is provided on a part of the second larger-diameter wall 441 of the through wall 41 forming the second through-hole 44. Thus, the bolt 31 can be rotated with respect to the nut 32 so as to engage the nut with the shaft part 31b, while the head part 31a of the bolt 31 can be accommodated in a space surrounded by the bolt accommodation wall 442.

Fig. 6 is an enlarged front view showing the head part 31a of the bolt 31 and its environment of the front view of Fig. 1. In the example shown in Fig. 6, a hole diameter w7 of a part of the second through-hole 44 in which the bolt accommodation wall 442 is formed is equal to or larger than a dimension w8 of the head part 31a in a direction perpendicular to the direction in which the bolt 31 extends. Thus, in a state where the head part 31a is accommodated in a space surrounded by the bolt accommodation wall 442, the bolt 31 can be rotated with respect to the nut 32. In the example shown in Fig. 6, the head part 31a has a circular profile seen from the rotation axis direction d2. A part of the second through-hole 44 in which the bolt accommodation wall 442 is formed is a circular hole. The hole diameter w7 of a part of the second through-hole 44 in which the bolt accommodation wall 442 is formed is equal to or larger than a diameter w8 of the head part 31a.

In a state where the pair of disc bodies 10 are fastened to the wheel 20, a distance w9 between the contact surface 19b of the disc body 10 in which the second through-hole 44 is formed and the head 31a of the bolt 31 is larger than the maximum allowable wear amount (see Fig. 4).

As shown in Figs. 5 and 6, when seen from the rotation axis direction d2 of the wheel 20, a shape of the first through-hole 43 and a shape of the second through-hole 44 differ from each other. For example, since a shape of the first larger-diameter wall 431 and a shape of the second larger-diameter wall 441 differ from each other, the shape of the first through-hole 43 and the shape of the second through-hole 44 are seen differently from each other, when seen from the rotation axis direction d2 of the wheel 20. In this embodiment, as described above, the restriction wall 432 of the first larger-diameter wall 431 has a profile including a pair of the straight portions 432a and a pair of the curved portions 432b, when seen from the rotation axis direction d2. On the other hand, the bolt accommodation wall 442 of the second larger-diameter wall 441 has a circular profile when seen from the rotation axis direction d2. Thus, when seen from the rotation axis direction d2 of the wheel 20, the first through-hole 43 and the second through-hole 44 can be distinguished from each other. As a result, in a below-described operation for fastening the pair of disc bodies 10 to the wheel 20, it can be suppressed that an operator confuses the first through-hole 43 in which the nut 32 should accommodated, with the second through-hole 44 into which the bolt 31 should be inserted. In particular, as described later, there is a case in which there are preferred positions of the nut 32 and the bolt 31 from the viewpoint of balance in weight and fastening force of the wheel with brake disc 100. In this case, it can be suppressed that the preferred positions of the nut 32 and the bolt 31 are damaged by an operator's mistake.

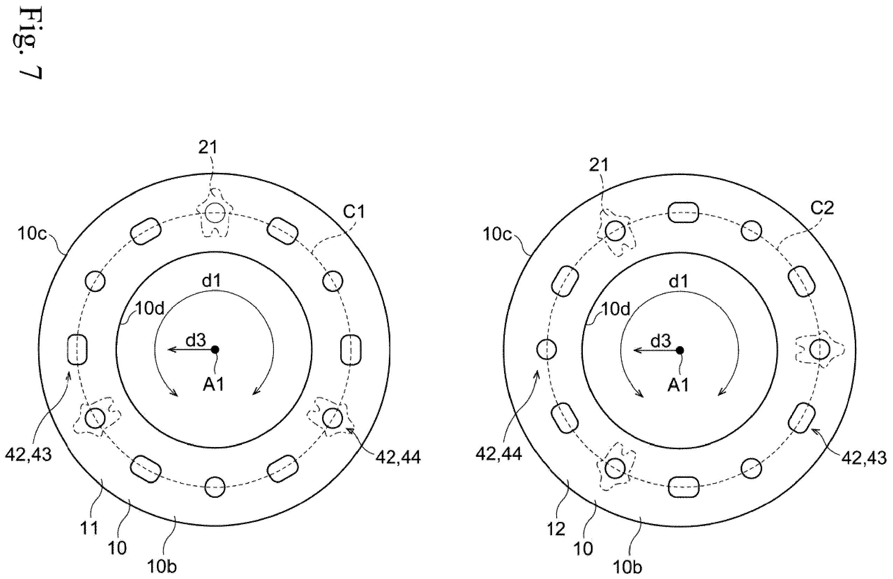

Positions of the first though hole 43 and the second through-hole 44 in the pair of disc bodies 10 are described. Fig. 7 is a view showing positions of the first through-holes 43 and the second through-holes 44 in the pair of disc bodies 10. Fig. 7 shows the pair of disc bodies 10 that are seen from the contact surface 10b. In Fig. 7, the shapes of the first through-hole 43, the second through-hole 44 and the pair of disc bodies 10 are more simplified than those of Fig. 3, etc., for the convenience of illustration of the positions of the first through-hole 43 and the second through-hole 44 and easy understanding.

As shown in Fig. 7, a plurality of the first through-holes 43 and a plurality of the second through-holes 44 are formed in one (e.g., first disc body 11) of the pair of disc bodies 10. In addition, a plurality of the first through-holes 43 and a plurality of the second through-holes 44 are formed in the other (e.g., second disc body 12) of the pair of disc bodies 10. Thus, holes into which the holes into which the bolts 31 are inserted from the first disc 11 when the pair of disc bodies 10 are fastened to the wheel 20, and holes into which the bolts 31 are inserted from the second disc body 12 when the pair of disc bodies 10 are fastened to the wheel 20 are both formed. This can make more equal the balance of a fastening force in the wheel with brake disc 100 formed by fastening.

As shown in Fig. 7, the number of the first through-holes 43 formed in one (e.g., first disc body 11) of the pair of disc bodies 10 and the number of the first through-holes 43 formed in the other (e.g., second disc body 12) of the pair of disc bodies 10 are the same with each other. In addition, as shown in Fig. 7, the number of the second through-holes 44 formed in one (e.g., first disc body 11) of the pair of disc bodies 10 and the number of the second through-holes 44 formed in the other (e.g., second disc body 12) of the pair of disc bodies 10 are the same with each other. This can offer the same effect. In the wheel with brake disc 100, the number of the nuts 32 accommodated in one of the pair of disc bodies 10 and the number of the nuts 32 accommodated in the other of the pair of disc bodies 10 can be the same with each other. In addition, the number of the bolts 31 accommodated in one of the pair of disc bodies 10 and the number of the bolts 31 accommodated in the other of the pair of disc bodies 10 can be the same with each other. Thus, the weight of the wheel with brake disc 100 can be equalized on the side where one of the pair of disc bodies 10 is positioned, and on the side where the other is positioned. In particular, even when the weight of the nut 32 to be accommodated in the first through-hole 43 and the weight of the head part 31a of the bolt 31 to be accommodated in the second through-hole 44 differ from each other, the weight of the wheel with brake disc 100 can be made uniform. Thus, when the wheel with brake disc 100 is rotated, it can be suppressed that the rotation axis A1 becomes unstable because of the non-uniform weight.

In this embodiment, the first disc body 11 and the second disc body 12 have the six first through-holes 43 and the six second through-holes 44, respectively. Accordingly, the first disc body 11 and the second disc body 12 respectively have the twelve through-holes 42.

In addition, as shown in Fig. 7, positions of the first through-holes 43 formed in one (e.g., first disc body 11) of the pair of disc bodies 10 and the positions of the first through boles 43 formed in the other (e.g., second disc body 12) of the pair of disc bodies 10 are the same with each other. In addition, positions of the second through-holes 44 formed in one (e.g., first disc body 11) of the pair of disc bodies 10 and the positions of the second through boles 44 formed in the other (e.g., second disc body 12) of the pair of disc bodies 10 are the same with each other. In this embodiment, the positions of the first through-holes 43 in the first disc body 11 and the positions of the first through-holes 43 in the second disc body 12 are the same with each other. In addition, the positions of the second through-holes 44 in the first disc body 11 and the positions of the second through-holes 44 in the second disc body 12 are the same with each other.

In this embodiment, the number and the positions of the first through-holes 43 and the number and the positions of the second through-holes 44 are the same with each other in the one and the other of the pair of disc bodies 10. Thus, one and the other of the pair of disc bodies 10 have the same shape with each other. Since one and the other of the pair of disc bodies 10 have the same shape with each other, it is not necessary to manufacture one and the other of the pair of disc bodies 10 separately from each other. Thus, the productivity of the brake disc 1 is improved. In addition, there is no risk that an operator confuses one and the other of the pair of disc bodies 10, during an operation for fastening the pair of disc bodies 10 to the wheel 20, which is described later.

In order to fasten the pair of disc bodies 10 to the wheel 20, it is necessary to overlap the first through-hole 43 formed in one of the pair of disc bodies 10 with the second through-hole 44 formed in the other of the pair of disc bodies 10 in the rotation axis direction d2, so as to form the bolt through-hole 40. In order that the bolt through-hole 40 can be formed while the pair of disc bodies 10 is used, the disc bodies 10 to be used should satisfy the following condition. Firstly, a virtual disc body, which has a second through-hole 44 that is formed at a position where a first through-hole 43 is formed in a disc body 10 to be used, and a first through-hole 43 that is formed at a position where a second through-hole 44 is formed in the disc body 10 to be used is considered. If the disc body 10 to be used and the virtual disc body can be disposed symmetrically with their inner surfaces facing each other, the bolt through-hole 40 can be formed while one and the other of the pair of disc bodies 10 can have the same shape with each other.

As shown in Fig. 7, the first through-holes 43 and the second through-holes 44 are provided rotationally symmetrically in one (e.g., first disc body 11) of the pair of disc bodies 10, when seen from the rotation axis direction d2 of the wheel 20. In addition, the first through-holes 43 and the second through-holes 44 are provided rotationally symmetrically in the other (e.g., second disc body 12) of the pair of disc bodies 10, when seen from the rotation axis direction d2 of the wheel 20. This offers the following effect. When the weight of the nut 32 and the weight of the head part 31a of the bolt 31 differ from each other, the nuts 32 and the head parts 31a of the bolts 31 can be provided rotationally symmetrically in one of the pair of disc bodies 10, when seen from the rotation axis direction d2, in the wheel with brake disc 100. In addition, the nuts 32 and the head parts 31a of the bolts 31 can be provided rotationally symmetrically in the other of the pair of disc bodies 10, when seen from the rotation axis direction d2. Thus, it can be suppressed that, when the wheel with brake disc 100 is rotated, the rotation axis A1 becomes unstable because of uneven distribution of the nuts 32 and the head parts 31a of the bolt 31.

In this embodiment, the first through-holes 43 and the second through-holes 44 are provided rotationally symmetrically in each of one and the other of the pair of disc bodies 10, about the rotation axis A1 of the wheel 20.

In addition, as shown in Fig. 7, the through-holes 42 are equidistantly disposed in one (e.g., first disc body 11) of the pair of disc bodies 10 on a circumference C1 about the rotation axis A1 of the wheel 20. In addition, the through-holes 42 are equidistantly disposed in the other (e.g., second disc body 12) of the pair of disc bodies 10 on a circumference C2 about the rotation axis A1 of the wheel 20.

In addition, as shown in Fig. 7, the first through-holes 43 and the second through-holes 44 are alternately formed in each of the pair of disc bodies 10 on the circumference about the rotation axis A1 of the wheel 20. In the example shown in Fig. 7, the through-holes 42 are disposed in one (e.g., first disc body 11) of the pair of disc bodies 10 such that the first through-holes 43 and the second through-holes 44 are alternated on a circumference of a circle C1. In addition, the through-holes 42 are disposed in the other (e.g., second disc body 12) of the pair of disc bodies 10 such that the first through-holes 43 and the second through-holes 44 are alternated on a circumference of a circle C2. This offers the following effect. When the weight of the nut 32 and the weight of the head part 31a of the bolt 31 differ from each other, the nuts 32 and the head parts 31a of the bolts 31 can be alternately disposed on the circumference of the circle C1 on one of the pair of disc bodies 10, when seen from the rotation axis direction d2, in the wheel with brake disc 100. In addition, the nuts 32 and the head parts 31a of the bolts 31 can be alternately disposed on the circumference of the circle C2 on the other of the pair of disc bodies 10. Thus, it can be more effectively suppressed that, when the wheel with brake disc 100 is rotated, the rotation axis A1 becomes unstable because of uneven distribution of the nuts 32 and the head parts 31a of the bolt 31 in the rotation direction d1.

In the example shown in Fig. 7, the circle C1, C2 passes through midpoints between an outer edge 10c and an inner edge 10d of each disc body 10 in a radial direction d3 perpendicular to the rotation axis direction d2. The first through-holes 43 and the second through-holes 44 are formed on the circle C1, C2 passing through the midpoints. This offers the following effect. There is a possibility that disc body 10 is warped by heat. In this case, when the disc body 10 is fastened at a position close to the inner edge 10d in the radial direction d3, the disc body 10 may be largely warped on the outer edge 10c side which is farther from the fastening position However, since the first through-holes 43 and the second through-holes 44 are formed on the circumference of the circle C1, C2 passing through the midpoints, the disc body 10 can be fastened to the wheel 20 on the circumference of the circle C1, C2 passing through the midpoints. Thus, the warp of the disc body 10 can be dispersed on the outer edge 10c side and on the inner edge 10d side to reduce the influence of the warp.

Note that the fact that the through-hole 42 is "disposed on the circumference" and that the through-hole 42 is "formed on the circumference" means that a part of the through-hole 42 is positioned on the circumference.

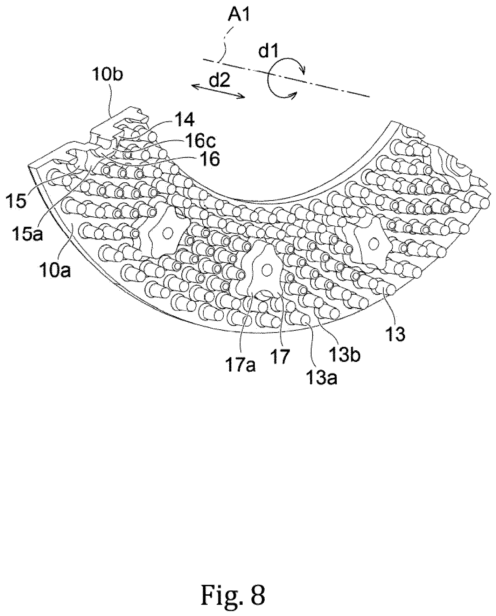

Next, the structure of the inner surface 10a side of the disc body 10 is described. Fig. 8 is a perspective view of the first disc body 11 seen from the inner surface 10af. Fig. 8 shows a part of the first disc body 11 which corresponds to the part shown in Fig. 2. As shown in Fig. 8, the brake disc 1 comprises a plurality of heat radiating members 13 provided on a principal surface of each of the pair of disc bodies 10 to project from the principal surface, and a first positioning unit 14 formed on each of the pair of disc bodies 10.

The heat radiating members 13 are provided on the respective inner surfaces 10a of the pair of disc bodies 10 to project from the inner surface 10a. When the pair of disc bodies 10 are fastened to each other with the wheel 20 therebetween, the plurality of heat radiating members 13 sandwich the wheel 20.

Due to the provision of the heat radiating members 13, a contact area between the brake disc 1 and the atmosphere increases. Thus, frictional heat, which is generated by the friction caused when brake pads come into contact with the contact surfaces 10b of the pair of disc bodies 10, is released to the atmosphere not only from the inner surfaces 10a and the contact surfaces 10b of the pair of disc bodies 10, but also from the surfaces of the heat radiating members 13. Thus, the pair of disc bodies 10 can be efficiently cooled.

In the example shown in Fig. 8, the heat radiating member 13 has a pin-like shape. Each of the pin-like heat radiating members 13 extends along the rotation axis direction d2. In the example shown in Fig. 8, the heat radiating member 13 has a substantially circular section when cut along a plane perpendicular to the rotation axis direction d2. The shape of a section of the pin-like heat radiating member 13, which is cut along a plane perpendicular to the rotation axis direction d2, is not limited to a circular shape, and may be, for example, an oblong shape, a polygonal shape, or another shape. In addition, although not shown, the shape of the heat radiating member 13 is not limited to a pin-like shape. The heat radiating member 13 may have, for example, a fin-like shape, in other words, a substantially plate-like shape perpendicular to the inner surface 10a.

The first positioning unit 14 is described. The first positioning unit 14 is a constituent element that guides the pair of disc bodies 10 and the wheel 20 such that they are brought into contact with each other in an appropriate positional relationship, when the pair of disc bodies 10 are fastened to the wheels 20. The first positioning units 14 are respectively formed on the pair of disc bodies 10. When the pair of disc bodies 10 are fastened to the wheel 20, the first positioning unit 14 is engaged with a below-described second positioning unit 21 of the wheel 20. the first positioning unit 14 positions each of the pair of the disc bodies 10 with respect to the wheel 20 by being engaged with the second positioning unit 21. In the example shown in Fig. 8, the first positioning unit 14 has a projection-like shape projecting from the inner surface 10a. The first positioning unit 14 projects more than the plurality of heat radiating members 13 in a height direction of these heat radiating members 13. In the example shown in Fig. 8, the height direction of the heat radiating member 13 corresponds to the rotation axis direction d2. The first positioning unit 14 projects from the inner surface 10a along the rotation axis direction d2 more than the heat radiating members 13.

In the example shown in Fig. 8, the first positioning unit 14 includes a base part 15 having the same height as that of the heat radiating members 13 in the height direction of the heat radiating members 13, and a first positioning projection 16 formed on a distal end surface 15a of the base part 15. The first positioning projection 16 is a projection that projects from the distal end surface 15a of the base part 15 in the height direction of the heat radiating member 13. The first positioning projection 16 is to be engaged with the below-described second positioning unit 21. Since the first positioning projection 16 is provided on a part of the distal end surface 15a of the base part 15, the first positioning projection 16 is thinner than the base part 15. Since the first positioning unit 14 has the base part 15, the first positioning unit 14 has a reliable strength, so that the first positioning unit 14 can be made difficult to break. In addition, the part of the first positioning unit 14 to be engaged with the second positioning unit 21 can have a shape and dimensions suitable for the engagement.

In the example shown in Fig. 8, the base part 15 of the first positioning unit 14 has a thickness larger than that of the pin-like heat radiating member 13. The first positioning projection 16 of the first positioning unit 14 also has a thickness larger than that of the pin-like heat radiating member 132. A plurality of the first positioning units 14 are formed to be equidistantly disposed on a circumference about the rotation axis A1 of the wheel 20. In this embodiment, each of the pair of disc bodies 10 have the three first positioning units 14.

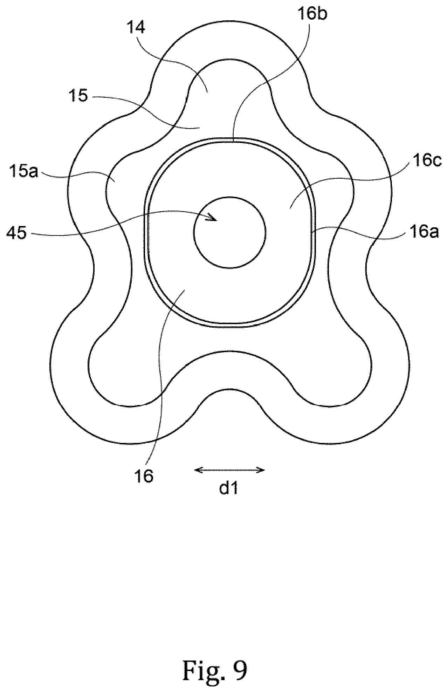

Fig 9 is a view showing the first positioning unit 14 having the first positioning projection 16 seen from the rotation axis direction d2. According to the invention the first positioning projection 16 includes a side surface having a pair of flat surfaces 16a opposed to each other, and a pair of curved surfaces 16b connecting the pair of flat surfaces 16a. When observed from the rotation axis direction d2 as shown in Fig. 9, each of the pair of curved surfaces 16b has a substantially arcuate profile.

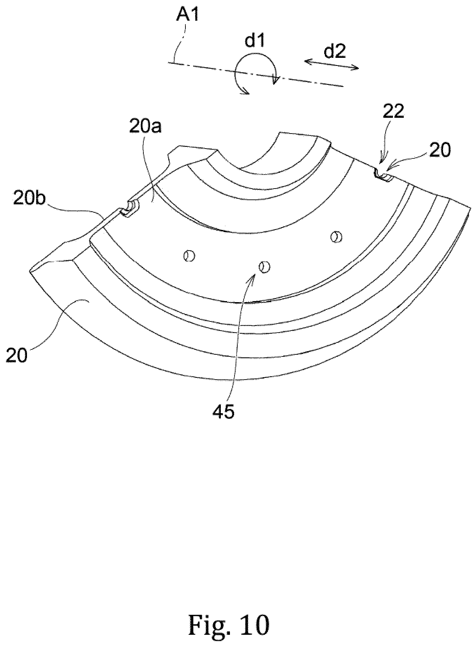

Next, the wheel 20 is described. Fig. 10 is a perspective view showing the wheel 20 in this embodiment. Fig. 10 shows a part of the wheel 20 which corresponds to the part shown in Fig. 2. The wheel 20 has a substantially discoid shape having a hole in its center. As shown in Fig. 10, the wheel 20 has a first surface 20a and a second surface 20b. As shown in Fig. 2, when the pair of disc bodies 10 are fastened to the wheel 20, the first surface 20a of the wheel 20 is opposed to the inner surface 10a of the first disc body 11, and the second surface 20b of the wheel 20 is opposed to the inner surface 10a of the second disc body 12. The wheel 20 is a wheel for railway vehicle. In the example shown in Fig. 2, when the wheel 20 is mounted on a railway vehicle, the first surface 20a is a surface that is positioned outside of the railway vehicle. When the wheel 20 is mounted on the railway vehicle, the second surface 20b is a surface that is positioned on the center side of the railway vehicle.

As shown in Fig. 4, in a state where the pair of disc bodies 10 are fastened to the wheel 20, a distal end 13a of the heat radiating member 13 and the distal end surface 15a of the base part 15 of the second disc body 12 are in contact with the second surface 20b. In addition, the distal end 13a of the heat radiating member 13 and the distal end surface 15a of the base part 15 of the first disc body 11 are in contact with the first surface 20a.

A wheel through-hole 45 penetrating from the first surface 20a up to the second surface 20b is formed in the wheel 20. In a state where the pair of disc bodies 10 are fastened to the wheel 20, the wheel through-hole 45 overlaps with the first through-hole 43 formed in one of the pair of disc bodies 10, and the second through-hole 44 formed in the other of the pair of disc bodies 10, in the rotation axis direction d2. Thus, the bolt through-hole 40 is formed by the wheel through-hole 45, the first through-hole 43 and the second through-hole 44. As shown in Fig. 4, in a state where the pair of disc bodies 10 are fastened to the wheel 20, the wheel through-hole 45 accommodates a part of the shaft part 31b of the bolt 31.

The wheel 20 is provided with the second positioning unit 21 with which the aforementioned first positioning unit 14 is engaged. The second positioning unit 21 positions each of the pair of the disc bodies 10 with respect to the wheel 20 by being engaged with the first positioning unit 14. In this embodiment, the second positioning unit 21 with which the first positioning unit 14 formed on the first disc body 11 is provided on the first surface 20a of the wheel 20. In addition, the second positioning unit 21 with which the first positioning unit 14 formed on the second disc body 12 is provided on the second surface 20b of the wheel 20. In each of the first surface 20a and the second surface 20b of wheel 20, a plurality of the second positioning units 21 are equidistantly disposed on a circumference about the rotation axis A1 of the wheel 20. The wheel 20 includes the three second positioning units 21 provided on the first surface 20a, and the three second positioning units 21 provided on the second surface 20b.

In this embodiment, as shown in Fig. 10, the second positioning unit 21 has a second positioning recess 22 with which the first positioning projection 16 is engaged. In the example shown in Fig. 10, the second positioning unit 21 has the second positioning recess 22 with which the first positioning unit 14 projecting from one surface of the disc body 10 is engaged. In the example shown in Fig. 10, the second positioning unit 21 has the second positioning recess 22 recessed in the rotation axis direction d2.

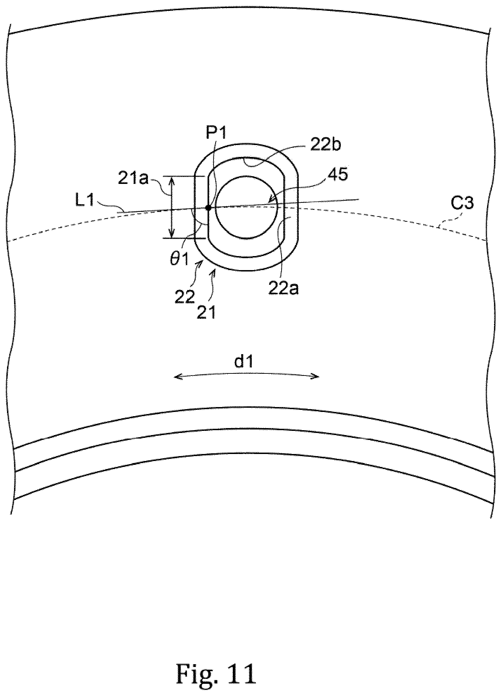

Fig. 11 is a view showing the second positioning unit 21 having the second positioning recess 22, when seen from the rotation axis direction d2. According to the invention the second positioning recess 22 includes a side surface having a pair of flat surfaces 22a parallel to each other, and a pair of curved surfaces 22b connecting the pair of flat surfaces 22a. When observed from the rotation axis direction d2 as shown in Fig. 11, each of the pair of curved surfaces 22b has a substantially arcuate profile.

In a state where the first positioning unit 14 is engaged with the second positioning unit 21, when the wheel 20 is relatively rotated with respect to the disc body 10 by a certain distance, the first positioning unit 14 and the second positioning unit 21 come into contact with each other. Thus, the relative rotation of the wheel 20 with respect to the disc body 10 by a certain distance or more can be prevented. When the wheel 20 is relatively rotated with respect to the disc body 10, a surface of the first positioning unit 14 and a surface of the second positioning unit 21 may come into contact with each other. For example, when the wheel 20 is relatively rotated with respect to the disc body 10, the first positioning unit 14 shown in Fig. 9 and the second positioning unit 21 shown in Fig. 11 come into contact with each other at their flat surface 16a and the flat surface 22a.

When the first positioning unit 14 and the second positioning unit 21 are in surface-contact with each other, a contact surface between the first positioning unit 14 and the second positioning unit 21 defines an angle between 75° or more and 105° or less with respect to the rotation direction d1 of the wheel 20.

The angle defined by the contact surface with respect to the rotation direction d1 is determined as follows. When the wheel 20 is relatively rotated with respect to the disc body 10, it is supposed that a contact surface between the second positioning unit 21 shown in Fig. 11 and the first positioning unit 14 is formed in an area 21a. In this case, a given circle C3 about the rotation axis A1 of the wheel 20 is drawn. Then, a tangent line L1 of the circle C3, which passes through an intersection point P1 of the circle C3 and the contact surface, is drawn. An angle θ1 defined between the tangent line L1 and the contact surface is determined as an angle defined by the contact surface with respect to the rotation direction d1.

An effect obtained by the fact that the contact surface between the first positioning unit 14 and the second positioning unit 21 defines an angle between 75° or more and 105° or less with respect to the rotation direction d1 of the wheel 20 is described. When a brake pad applies a braking force to the disc body 10, the first positioning unit 14 and the second positioning unit 21 come into contact with each other, so that the braking force is transmitted from the disc body 10 to the wheel 20. When the contact surface satisfies the above condition, the braking force acting in the direction opposite to the rotation direction d1 of the wheel 20 can be received by the contact surface defining an angle almost perpendicular to the direction of the braking force (angle between 75° or more and 105° or less). Thus, the braking force applied to the disc body 10 can be efficiently transmitted to the wheel 20 through the contact surface between the first positioning unit 14 and the second positioning unit 21.

A positional relationship between the first positioning unit 14 / second positioning unit 21 and the bolt through-hole 40 is described. As shown in Fig. 4, the first positioning unit 14 and the second positioning unit 21 form the bolt through-hole 40 composed of the through-hole 42 and the wheel through-hole 45. The through-hole 42 is formed in the first positioning unit 14, and the wheel through-hole 45 is formed in the second positioning unit 21. In the example shown in Fig. 4, the bolt through-hole 40 passes through a distal end surface 16c of the first positioning projection 16.

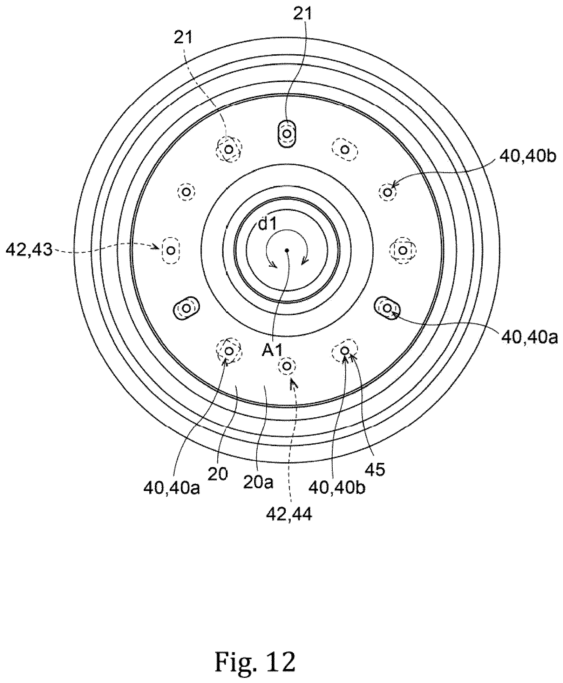

Fig. 12 shows positions of the second positioning units 21 and the wheel through-holes 45, when the first surface 20a of the wheel 20 is seen from the rotation axis direction d2. In Fig. 12, the positions of the second positioning units 21 provided on the first surface 20a of the wheel 20 are shown by solid lines, and the positions of the second positioning units 21 provided on the second surface 20b of the wheel 20 are shown by one-dot chain lines. In a state where the pair of disc bodies 10 are fastened to the wheel 20, the first positioning units 14 formed on the first disc body 11 are engaged with the second positioning units 21 provided on the first surface 20a of the wheel 20, while the first positioning units 14 formed on the second disc body 12 are engaged with the second positioning units 21 provided on the second surface 20b of the wheel 20.

Fig. 12 shows by broken lines positions at which the first through-holes 43 and the second through-holes 44 of the first disc 11 overlap with the wheel 20, in a state where the pair of disc bodies 10 are fastened to the wheel 20. Although not shown, the second through-hole 44 of the second disc 12 overlaps with a position of the wheel 20 which overlaps the first through-hole 43 of the first disc 11. In addition, the first through-hole 43 of the second disc 12 overlaps with a position of the wheel 20 which overlaps with the second through-hole 44 of the first disc 11.

In Fig. 12, the shapes of the second positioning unit 21, the wheel through-holes 45, the first through-holes 43, the second through-holes 44 and the wheel 20 are more simplified than those of Figs. 3, 10, etc., for the convenience of illustration of the positions of the second positioning unit 21, the wheel through-holes 45, the first through-hole 43 and the second through-hole 44 and easy understanding.

In this embodiment, as shown in Fig. 12, the second positioning units 21 provided on the first surface 20a of the wheel 20 and the second positioning units 21 provided on the second surface 20b of the wheel 20 do not overlap with each other in the rotation axis direction d2. Thus, in a state where the pair of disc bodies 10 are fastened to the wheel 20 so that the wheel with brake disc 100 is formed, positions of the first positioning units 14 provided on one of the pair of disc bodies 10 and the first positioning units 14 provided on the other differ from each other in the rotation axis direction d2. In other words, in the wheel with brake disc 100, the first positioning units 14 provided on one of the pair of disc bodies 10 and the first positioning units 14 provided on the other do not overlap with each other in the rotation axis direction d2. In the wheel with brake disc 100, a position at which the first positioning unit 14 provided on one of the pair of disc bodies 10 is engaged with the second positioning unit 21, and a position at which the first positioning unit 14 provided on the other of the pair of disc bodies 10 is engaged with the second positioning unit 21, do not overlap with each other in the rotation axis direction d2.

An effect obtained by the fact that the positions of the first positioning unit 14 provided on one of the pair of disc bodies 10 and the first positioning unit 14 provided on the other differ from each other in the rotation axis direction d2 in the wheel with brake disc 100 is described. When a brake pad applies a braking force to the disc body 10, the braking force is transmitted from the disc body 10 to the wheel 20 through the portion at which the first positioning unit 14 is engaged with the second positioning unit 21. Since the positions of the first positioning unit 14 provided on one of the pair of disc bodies 10 and the first positioning unit 14 provided on the other differ from each other, a position at which the braking force is transmitted from one of the pair of disc bodies 10 to the wheel 20 and a position at which the braking force is transmitted from the other of the pair of disc bodies 10 to the wheel 20 also differ from each other in the rotation direction d1 of the wheel 20. Thus, a load caused by the braking force onto the wheel 20 can be distributed in the rotation direction d1 of the wheel 20.

Some of the bolt through-holes 40 are first bolt through-holes 40a each of which penetrates through a portion at which the first positioning unit 14 of one of the pair of disc bodies 10 is formed, and a portion at which the first positioning unit 14 of the other of the pair of disc bodies 10 is not formed. In addition, others of the bolt through-holes 40 are second bolt through-holes 40b each of which penetrates through portions at which no first positioning unit 14 of the pair of disc bodies 10 is formed. In Fig. 12, in a state where the air of disc bodies 10 are fastened to the wheel 20 so that the wheel with brake disc 100 is formed, a position at which the first bolt through-hole 40a is formed is indicated by a symbol 40a for the sake of convenience, and a position at which the second bolt through-hole 40b is formed is indicated by a symbol 40b for the sake of convenience.

In this embodiment, as can be understood from Figs. 2, 3 and 12, the second through-hole 44 is formed in the first positioning unit 14 in both of the pair of disc bodies 10. Namely, each of the first bolt through-holes 40a includes the second through-hole 44 which is formed at a portion of one of the pair of disc bodies 10, at which the first positioning unit 14 is formed, and the first through-hole 43 which is formed at a position of the other of the pair of disc bodies 10, at which the first positioning unit 14 is not formed. Each of the first through-hole 43 is formed at a portion of the disc body 10, at which the first positioning unit 14 is not formed.

An effect obtained by the fact that the second through-hole 44 if formed in the first positioning unit 14 in both of the pair of disc bodies 10 is described. In this embodiment, one and the other of the pair of disc bodies 10 have the same shape with each other, from the viewpoint of improvement in manufacturability. On the other hand, as described above, the first through-hole 43 in which the nut 32 is to be accommodated, and the second through-hole 44 in which the head part 31a of the bolt 31 is to be accommodated differ from each other in shape. When the pair of disc bodies 10 are fastened to the wheel 20, the first through-hole 43 formed in one of the pair of disc bodies 10 and the second through-hole 44 formed in the other of the pair of disc bodies 10 are firstly overlapped with each other, and then the bolt 31 and the nut 32 are used to fasten them. Suppose that the second through-holes 44 formed in one and the other of the pair of disc bodies 10 are overlapped with each other. In this case, the fastening is impossible by means of the second through-holes 44. Thus, the pair of first disc bodies 10 and the wheel 20 are designed such that the second through-holes 44 overlap with each other upon fastening.

When the second through-hole 44 is formed in the first positioning unit 14 in both of the pair of disc bodies 10, it is necessary that the second positioning units 21 of the wheel 20 are positioned such that the second through-holes 44 formed in the first positioning units 14 do not overlap with each other. To be specific, as described above, the second positioning unit 21 provided on the first surface 20a of the wheel 20 and the second positioning unit 21 provided on the second surface 20b of the wheel 20 are positioned so as not to overlap with each other in the rotation axis direction d2. Thus, in the wheel with brake disc 100 formed by engaging the first positioning units 14 of the pair of disc bodies 10 with the second positioning units 21 of the wheel 20, the positions of the first positioning units 14 provided on one and the other of the pair of disc bodies 10 can be differed from each other. Namely, although one and the other of the pair of disc bodies 10 have the same shape with each other, the positions of the first positioning units 14 provided on one and the other pair of disc bodies 10 can be differed from each other in the wheel with brake disc 100.

The following effect can be obtained by the fact that the through-hole 44 is formed in the first positioning unit 14 in both of the pair of disc bodies 10, and that the second positioning unit 21 provided on the first surface 20a of the wheel 20 and the second positioning unit 21 provided on the second surface 20b of the wheel 20 are positioned so as not to overlap with each other in the rotation axis direction d2. Namely, when the pair of disc bodies 10 are fastened to the wheel 20, the second through-holes 44 formed in the first positioning units 14 can be prevented from being overlapped with each other, by fastening the first positioning units 14 of the pair of disc bodies 10 to the second positioning units 21 of the wheel 20.

As can be understood from Figs. 4 and 12, some of the first bolt through-holes 40a each include the second through-hole 44 which is formed at a portion of the first disc body 11, at which the first positioning unit 14 is formed, the wheel through-hole 45 which is formed at a portion of the wheel 20, at which the second positioning unit 21 is provided on the first surface 20a and the second positioning unit 21 is not provided on the second surface 20b, and the first through-hole 43 which is formed at a portion of the second disc body 12, at which the first positioning unit 14 is not formed. Others of the first bolt through-holes 40 each include the first through-hole 43 which is formed at a portion of the first disc 11, at which the first positioning unit 14 is not formed, the wheel through-hole 45 which is formed at a portion of the wheel, at which the second positioning unit 21 is not provided on the first surface 20a and the second positioning unit 21 is provided on the second surface 20b, and the second through-hole 44 which is formed at a portion of the second disc 12, at which the first positioning unit 14 is formed. The second bolt through-holes 40b each include the first through-hole 43 which is formed at a portion of the first disc 11, at which the first positioning unit 14 is not formed, the wheel through-hole 45 which is formed at a portion of the wheel 20 at which no second positioning unit 21 is provided on the first surface 20a and the second surface 20b, and the second through-hole 44 which is formed at a portion of the second disc 12, at which the first positioning unit 14 is not formed.

In this embodiment, as can be understood from Fig. 12, the bolt through-holes 40 are comprised of three first bolt through-holes 40a each of which include the second through-hole 44 which is formed at a portion of the first disc body 11, at which the first positioning unit 14 is formed, three first bolt through-holes 40a each of which include the second through-hole 44 which is formed at a portion of the second disc body 12, at which the first positioning unit 14 is formed, and the six second bolt through-holes 40b.

The one-dot chain shown lines in Fig. 7 indicate the positions of the first positioning units 14 provided on the inner surface 10b of the disc body 10. In the example shown in Fig. 7, the second through-holes 44 are formed such that the second through-hole 44 which is formed at a portion of the disc body 10, at which the first positioning unit 14 is formed, and the second through-hole 44 which is formed at a portion of the disc body 10, at which the first positioning unit 14 is not formed, are alternated on the circumferences C1 and C2. In a state where the first pair of disc bodies 10 are fastened to the wheel 20, as shown in Fig. 12, the bolt through-holes 40 are disposed such that the first bolt through-holes 40a and the second bolt through-holes 40b are alternated about the rotation axis A1 of the wheel 20.

In the example shown in Fig. 8, a through-hole support 17 is formed on the inner surface 10a of each of the pair of disc bodies 10. The second through-hole 44 each of which is formed at a portion of the disc body 10, at which the first positioning unit 14 is formed, and the first through-hole 43 are respectively formed in the through-hole support 17. The through-hole support 17 has a shape like a projection projecting from the inner surface. The through-hole support 17 has the same height as that of the heat radiating members 13 in the height direction of the heat radiating members 13. In a state where the pair of disc bodies 10 are fastened to the wheel 20, a distal end surface 17a of the through-hole support 17 is in contact with the wheel 20. The through-hole support 17 has a thickness larger than that of the pin-like heat radiating member 13.

Since the first through-hole 43 and the second through-hole 44 are each provided at a portion of the disc body 10, at which the first positioning unit 14 or the through-hole support 17 are provided, the shaft part 31b of the bolt 31 inserted into the bolt through-hole 40 can be protected. The invention according to this embodiment can also be regarded as an invention in which the base part 15, which protects the shaft part 31b of the bolt 31 similarly to the through-hole support 17, is used as the first positioning unit 14, so that the structure of the brake disc 1, which is provided with the first positioning unit 14, is simplified.

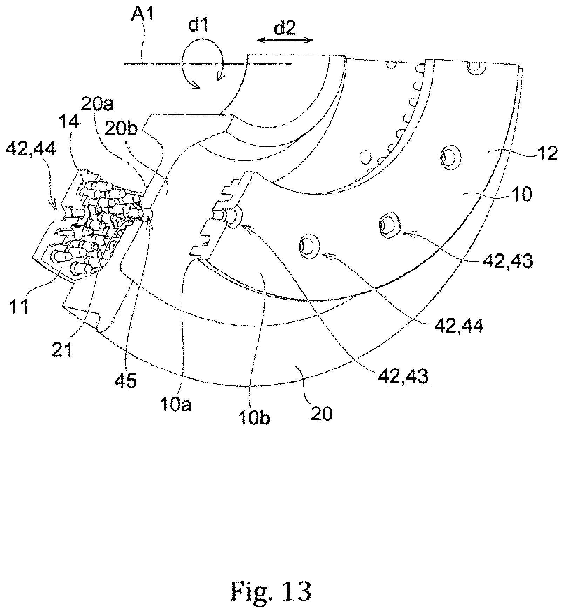

A method of manufacturing the wheel with brake disc 100 by fastening the pair of disc bodies 10 in this embodiment to the wheel 20 is described. Fig. 13 is a view showing an operation of fastening the pair of disc bodies 10 to the wheel 20. Fig. 13 shows a fastening operation of a portion corresponding to the portion of the first disc body 11 shown in Fig. 2.

In the fastening operation, as shown in Fig. 13, the pair of disc bodies 10 are overlapped with the wheel 20. At this time, the first disc body 11 is overlapped with the wheel 20 such that the first positioning unit 14 formed on the first disc body 11 and the second positioning unit 21 provided on the first surface 20a of the wheel 20 are overlapped with each other in the rotation axis direction d2. In addition, the second disc body 12 is overlapped with the wheel 20 such that the first positioning unit 14 formed on the second disc body 12 and the second positioning unit 21 provided on the second surface 20b of the wheel 20 are overlapped with each other in the rotation axis direction d2. At this time, since the through-hole 42 is formed in the first positioning unit 14, an operator can overlap the pair of disc bodies 10 with the wheel 20 while visually checking the second positioning unit 21 of the wheel 20 through the through-hole 42.

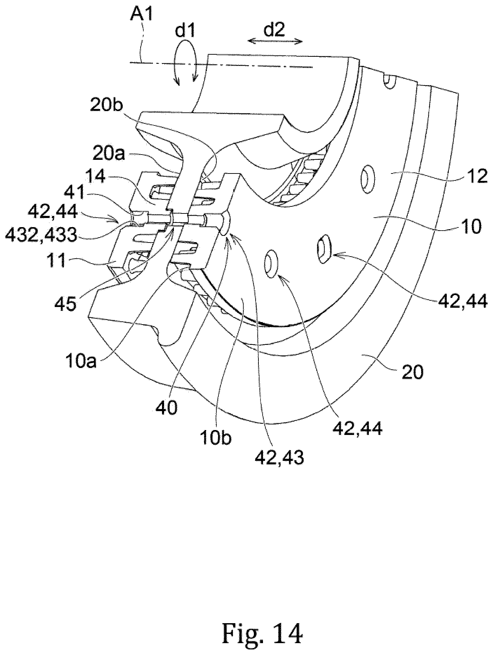

Then, as shown in Fig. 14, the pair of disc bodies 10 are respectively brought close to the wheel 20 so that the first positioning unit 14 is engaged with the second positioning unit 21. Thus, the pair of disc bodies 10 and the wheel 20 are aligned with each other. In the aligned state, the pair of disc bodies 10 and the wheel 20 are in contact with each other in an appropriate positional relationship in terms of fastening of the pair of disc bodies 10 to the wheel 20. In the appropriate positional relationship, the first through-hole 43 formed in the first disc body 11, the wheel through-hole 45 formed in the wheel 20, and the second through-hole 44 formed in the second disc body 44 overlap with one another in the rotation axis direction d2, so as to allow insertion of the bolt 31. In addition, the second through-hole 44 formed in the first disc body 11, the wheel through-hole 45 formed in the wheel 20, and the first through-hole 43 formed in the second disc body 44 overlap one another in the rotation axis direction d2, so as to allow insertion of the bolt 31.

In this embodiment, the pair of disc bodies 10 and the wheel 20 can be aligned with each other by using the first positioning units 14 formed on the pair of disc bodies 10 and the second positioning units 21 provided on the wheel 20. Thus, the alignment can be more easily performed than a case in which an alignment pin, which is engageable with the disc body 10 and the wheel 20 and is separated from the disc body 10 and the wheel 20, is prepared and used for alignment. In particular, the wheel 20 for railway vehicle and the disc body 10 to be fastened to the wheel 20 for railway vehicle may be large. However, the present invention can facilitate the alignment of the large disc body 10 and the large wheel 20.

Then, the nut 32 is disposed so as to be surrounded by the restriction wall 432 of the first through-hole 43. Thereafter, the bolt 31 is inserted into the bolt through-hole 40 from the second through-hole 44. When the distal end of the shaft part 31b of the bolt 31 comes into contact with the nut 32, the bolt 31 is rotated with respect to the nut 32. By these operations, the nut 32 is engaged with the shaft part 31b of the bolt 31. Thus, as shown in Figs. 1 and 2, the pair of disc bodies 10 are fastened to the wheel 20 so that the wheel with brake disc 100 is manufactured.

In this embodiment, the through wall 41 forming the through-hole 42 (first through-hole 43) is partially provided with the restriction wall 432 that restricts the nut 32 from rotating together with the rotation of the bolt 31 when the pair of disc bodies 10 are fastened to the wheel 20. Thus, after the nut 32 has been accommodated in a space surrounded by the restriction wall 432 and the bolt 31 has been inserted into the bolt through-hole 40, an operator can perform the fastening operation without the need for fixing the nut 32 by holding it by hand, for example. In particular, the wheel 20 for railway vehicle and the disc body 10 to be fastened to the wheel 20 for railway vehicle may be large. However, the present invention can facilitate the alignment of the large disc body 10 and the large wheel 20. For example, in the operation for fastening the large disc body 10 and the large wheel 20 to each other, when one operator inserts the bolt 31 and rotates it, it is not necessary for another operator to hold the nut 32. Thus, the efficiency of the fastening operation can be improved.

In addition, in this embodiment, the bolt through-hole 40 is provided in the first positioning unit 14 and the second positioning unit 21. Thus, the first positioning unit 14 is securely engaged with the second positioning unit 21 by fastening the pair of disc bodies 10 to the wheel 20 by using the bolt 31 passing through the bolt through-hole 40. Thus, a braking force can be efficiently transmitted from the disc body 10 to the wheel 20 through the portion at which the first positioning unit 14 is engaged with the second positioning unit 21.

Although one embodiment has been described above with reference to the specific example, but the aforementioned specific example is not intended to limit the one embodiment. The aforementioned one embodiment can be embodied differently, and can be variously omitted, replaced and change without departing from the scope thereof.

Modification examples are described herebelow with reference to the drawings. In the following description and the drawings used therein, the same symbols as those used for the corresponding parts in the aforementioned specific example are used for parts that can be formed similarly to the aforementioned specific example, and duplicate explanation is omitted.

### (Modification Example 1)

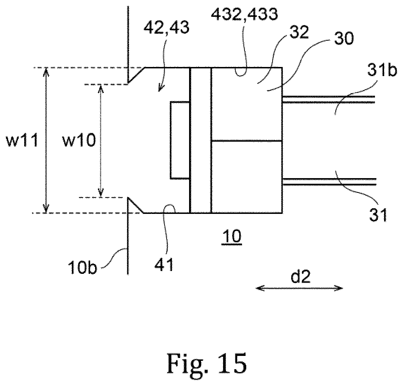

In the aforementioned embodiment, the shape of the first through-hole 43 is described with reference to Figs. 4 and 5. However, the shape of the first through-hole 43 is not limited thereto. Fig. 15 shows the first through-hole 43 in Modification Example 1. Fig. 15 is an enlarged sectional view of the first through-hole 43 and its environment, when the disc body 10 having the first through-hole 43 with the nut accommodation wall 433 is cut along a plane parallel to a direction in which the first through-hole 43 extends. In Fig. 15, the fastening member 30 disposed in the first through-hole 43 is shown in a plan view seen from a direction perpendicular to the section.

In the example shown in Fig. 15, a hole diameter w10 of the first through-hole 43 in a contact surface 10b of the disc body 10 is smaller than a hole diameter w11 of a portion at which the nut accommodation wall 433 of the first through-hole 43 is formed. The portion at which the nut accommodation wall 433 is formed is a portion of a through wall 41, with which the nut 32 is in contact, in a state where the pair of disc bodies 10 are fastened to the wheel 20.

By applying a force to the nut 32 into the first through-hole 43, the nut 32 can be accommodated in a space surrounded by the nut accommodation wall 433 of the first through-hole 43 shown in Fig. 15. In the example shown in Fig. 15, the hole diameter w10 of the opening of the first through-hole 43 in the contact surface 10b is smaller than the hole diameter w11 of a portion at which the nut accommodation walls 433 of the first through-hole 43 are formed. Thus, when the shaft part 31b of the bolt 31 is engaged with the nut 32 accommodated in a space surrounded by the nut accommodation wall 433, it can be suppressed that the nut 32 is pressed by the bolt 31 so as to be detached from the first through-hole 43.

### (Modification Example 2)

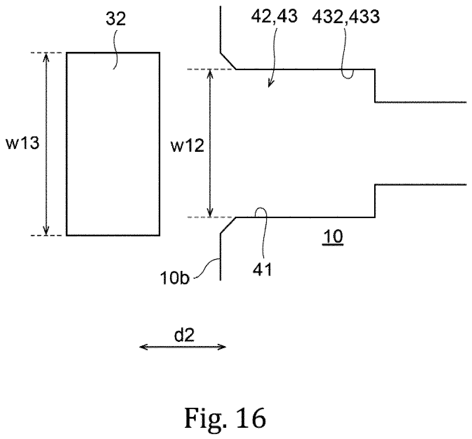

In the aforementioned embodiment and the modification example, the shape of the first through-hole 43 is described with reference to Figs. 4, 5 and 15. However, the shape of the first through-hole 43 is not limited thereto. Not limited to the illustrated example, a shape having the restriction wall 432 capable of restricting the rotation of the nut 32 can be widely used as the shape of the first through-hole 43. Fig. 16 shows the first through-hole 43 in Modification Example 2. Fig. 16 is an enlarged sectional view of the first through-hole 43 and its environment, when the disc body 10 having the first through-hole is cut along a plane parallel to a direction in which the first through-hole 43 extends. Fig. 16 also shows the nut 32 disposed inside the first through-hole 43 in a plan view seen from a direction perpendicular to the section.

In the example shown in Fig. 16, a hole diameter w12 of a part of the first through-hole 43, at which the restriction wall 432 is formed, is smaller than a dimension w13 of the nut 32 in a direction orthogonal to a direction in which the bolt 31 with which the nut 32 is engaged extends. In this case, by applying a force to the nut 32 into a space surrounded by the restriction wall 432, the nut 32 can be accommodated in a space surrounded by the restriction wall 432. Since the nut 32 is pinched by the restriction wall 432, the rotation of the nut 32 is restricted.

For example, the nut 32 has a columnar shape provided with a hole to be engaged with a shaft part 31b of the bolt 31. A portion of the first through-hole 43, at which the restriction walls 432 are formed, is a circular hole. The portion of the first through-hole 43, at which the restriction walls 432 are formed, is formed such that its hole diameter w12 is smaller than the diameter w13 of the columnar nut 32.

### (Modification Example 3)

In the aforementioned embodiment and the respective modification examples, the example in which the first positioning unit 14 projects more than the plurality of heat radiating members 13 in the height direction of the heat radiating members 13, and the second positioning unit 21 has the second positioning recess 22 to be engaged with the projecting first positioning unit 14 is shown. However, the shapes of the first positioning unit 14 and the second positioning unit 21 are not limited thereto. The shapes of the first positioning unit 14 and the second positioning unit 21 are not particularly limited, for example, as long as one of the first positioning unit 14 and the second positioning unit 21 has a projecting shape and the other has a recessed shape, and the one having the projecting shape and the other having the recessed shape can be engaged with each other.

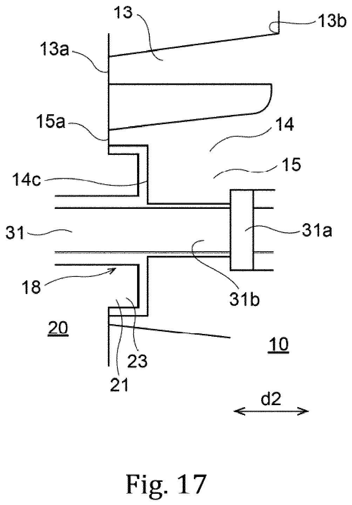

Fig. 17 shows the first positioning unit 14 and the second positioning unit 21 in Modification Example 3. Fig. 17 is an enlarged sectional view showing the first positioning unit 14 and the second positioning unit 21 and their environment, when the disc body 10 having the first positioning unit 14 and the wheel 20 having the second positioning unit 21 are cut along a plane parallel to a direction in which the bolt through-hole 40 extends.

In the example shown in Fig. 17, the first positioning unit 14 is located nearer to a root part 13b of the heat radiating member 13 than a distal end 13a of the heat radiating member 13 in the height direction of the heat radiating members 13. In the example shown in Fig. 17, the first positioning unit 14 has a positioning surface 14c. The positioning surface 14c is located nearer to a root part 13b of the heat radiating member 13 than a distal end 13a of the heat radiating member 13 in the high direction of the heat radiating member 13, and is opposed to the wheel 20. In particular, the first positioning unit 14 has a base part 15 having the same height as that of the heat radiating member 13 in the height direction of the heat radiating member 13, and a first positioning recess 18 formed in a distal end surface 15a of the base part 15. In this case, a bottom surface of the first positioning recess 18 serves as the positioning surface 14c. In the example shown in Fig. 17, the bolt through-hole 40 passes through the positioning surface 14c. In addition, in the example shown in Fig. 17, the second positioning unit 21 has a second positioning projection 23 with which the first positioning unit 14 having the positioning surface 14c is engaged. In the example shown in Fig. 17, the first positioning unit 14 has a recessed shape in the first positioning recess 18. The second positioning unit 21 has a projecting shape in the second positioning projection 23. In the example shown in Fig. 17, the second positioning projection 23 is engaged with the first positioning recess 18.

From the viewpoint of preventing the second positioning unit 21 having a projecting shape from being incorrectly engaged with a space between the heat radiating members 13 when the pair of disc bodies 10 and the wheel 20 are aligned, the second positioning unit 21 having a recessed shape is preferred to the second positioning unit 21 having a projecting shape. From the above viewpoint, it is preferable that the first positioning unit 14 projects more than the heat radiating members 13 in the height direction of the heat radiating members 13, and that the second positioning unit 21 has the second positioning recess 22.

### (Modification Example 4)

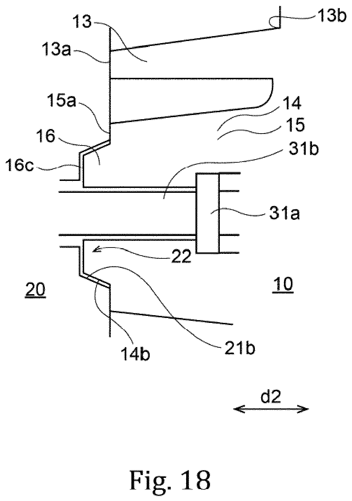

In the aforementioned embodiment and the respective modification examples, the shapes of the first positioning unit 14 and the second positioning unit 21 are described with reference to Figs. 4, 9, 10 and 17. However, the shapes of the first positioning unit 14 and the second positioning unit 21 are not limited thereto. Fig. 18 shows the first positioning unit 14 and the second positioning unit 21 in Modification Example 4. Fig. 18 is an enlarged sectional view showing the first positioning unit 14 and the second positioning unit 21 and their environment, when the disc body 10 having the first positioning unit 14 and the wheel 20 having the second positioning unit 21 are cut along a plane parallel to a direction in which the bolt through-hole 40 extends.

In Modification Example 4, at least one of the first positioning unit 14 and the second positioning unit 21 has an inclined surface 14b, 21b that is inclined along an insertion direction of the bolt 31. In the example showing in Fig. 18, the insertion direction of the bolt 31 is the same as the direction in which the bolt through-hole 40 extends, and thus is the same as the rotation axis direction d2. The first positioning unit 14 has the inclined surface 14b inclined with respect to the rotation axis direction d2. In addition, the second positioning unit 21 has the inclined surface 21b inclined with respect to the rotation axis direction d2.

One of the first positioning unit 14 and the second positioning unit 21, which has a projecting shape, has an inclined surface that is inclined such that a width of the projecting shape narrows toward a distal end of the projecting shape. In addition, the other of the first positioning unit 14 and the second positioning unit 21, which has a recessed shape, has an inclined surface that is inclined such that a width of the recessed shape narrows toward a bottom of the recessed shape. In the example shown in Fig. 18, the first positioning unit 14 has the base part 15 and the first positioning projection 16, and has a projecting shape in the first positioning projection 16. A side surface of the first positioning projection 16 serves as the inclined surface 14b that is inclined such that a width of the first positioning projection 16 narrows towards the distal end surface 16c. In addition, in the example shown in Fig. 18, the second positioning unit 21 has the second positioning recess 22, and has a recessed shape in the second positioning recess 22. A side surface of the second positioning recess 22 serves as the inclined surface 21b that is inclined such that a width of the second positioning recess 22 narrows toward the bottom.

Since at least one of the first positioning unit 14 and the second positioning unit 21 has the inclined surface 14b, 21b, the first positioning unit 14 can be easily engaged with the second positioning unit 21 along the inclined surface 14b, 21b. Thus, it is easy to engage the first positioning unit 14 with the second positioning unit 21. In particular, the distal end of one of the first positioning unit 14 and the second positioning unit 21, which has a projecting shape, can be easily inserted into the other having a recessed shape.

### (Modification Example 5)

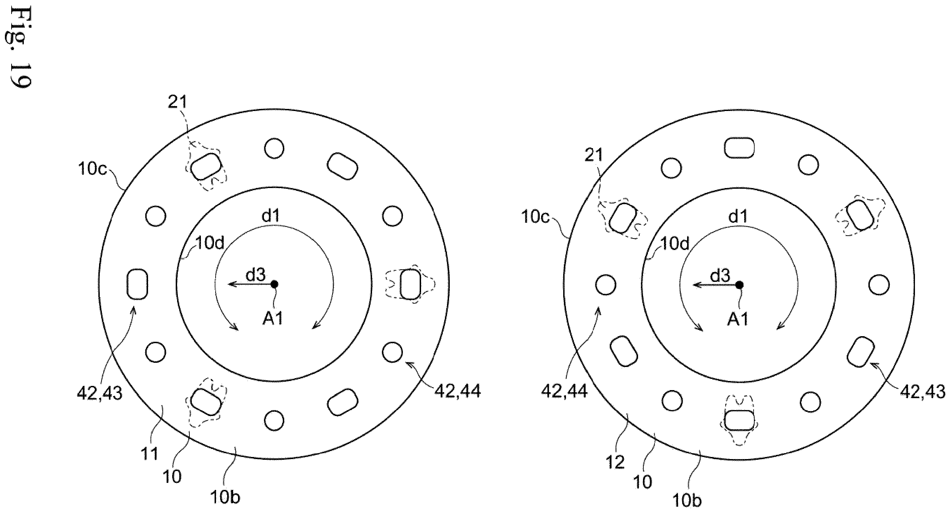

In the aforementioned embodiment and the respective modification examples, an example in which the second through-hole 44 is formed as the through-hole 42 in the first positioning unit 14 in both of the pair of disc bodies 10 is described. However, the positional relationship between the first positioning unit 14 and the through-hole 42 is not limited thereto. Fig. 19 is a view showing positional relationship between the first positioning unit 14 and the through-hole 42 in the pair of disc bodies 10 in Modification Example 5. Fig. 19 shows the pair of disc bodies 10 seen from the contact surface 10b side, respectively. In Fig. 19, the shapes of the first through-holes 43, the second through-holes 44 and the pair of disc bodies 10 are simplified similarly to Fig. 7, for the convenience of illustration of the positions of the first through-hole 43 and the second through-hole 44 and easy understanding. The one-dot chain lines shown in Fig. 19 indicate positions of the first positioning units 14 provided on the inner surface 10a of the disc body 10.

In the example shown in Fig. 19, the first through-hole 43 is formed in the first positioning unit 14 in both of the pair of disc bodies 10. Also in this case, the same effect as the effect obtained by the case where the second through-hole 44 is formed in the first positioning unit 14 in both of the pair of disc bodies 10, which is described above, can be obtained. The description about the position of the second through-hole 44 in the case where the second through-hole 44 is formed in the second through-hole, which is described above, is also applied to the position of the first through-hole 43 in the case where the first through-hole 43 is formed in the first positioning unit 14, as long as they are not contradictory to each other.

### (Modification Example 6)

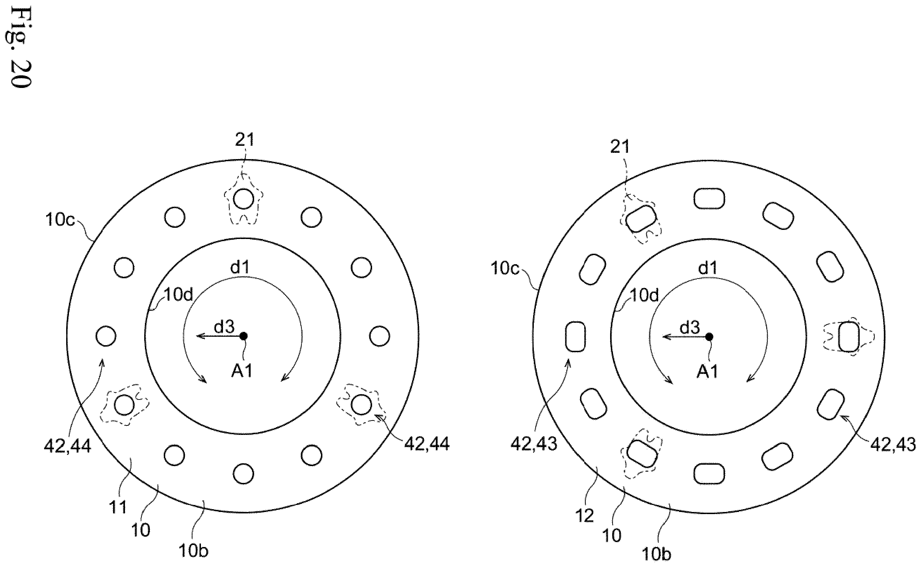

In the aforementioned embodiment and the respective modification examples, an example in which the first through-holes 43 and the second through-holes 44 are formed in one of the pair of disc bodies 10, and the first through-holes 43 and the second through-holes 44 are also formed in the other of the pair of disc bodies 10 is described. However, the positions of the first through-holes 43 and the second through-holes 44 are not limited thereto. Fig. 20 is a view showing the positions of the first through-holes and the second through-holes in the pair of disc bodies 10 in Modification Example 6. Fig. 20 shows the pair of disc bodies 10 seen from the contact surface 10b side, respectively. In Fig. 20, the shapes of the first through-holes 43, the second through-holes 44 and the pair of disc bodies 10 are simplified similarly to Figs. 7 and 19, for the convenience of illustration of the positions of the first through-hole 43 and the second through-hole 44 and easy understanding. The one-dot chain lines shown in Fig. 20 indicate positions of the first positioning units 14 provided on the inner surface 10a of the disc body 10.

In the example shown in Fig. 20, only the through-holes 43 as the through-holes 42 are formed in one of the pair of disc bodies 10. In addition, only the second through-holes 44 as the through-hole 42 are formed in the other of the pair of disc bodies 10. Namely, no second through-hole 44 is formed in the one of the pair of disc bodies 10, and no first through-hole 43 is formed in the other of the pair of disc bodies 10. Also in this case, the bolt through-hole 40 is formed by overlapping the first through-hole 43 formed in one of the pair of disc bodies 10 and the second through-hole 44 formed in the other in the rotation axis direction d2.

The pair of disc bodies 10 shown in Fig. 20 can be fastened to the wheel 20 in the following procedure. The nuts 32 are firstly accommodated in all the through-holes 42 (first through-holes 43) in one of the pair of disc bodies 10. Then, the bolts 31 are inserted from all the through-holes 42 (second through-holes 44) in the other of the pair of disc bodies 10, and the nuts 32 are engaged with the shaft parts 31b of the bolts 31. As compared with the pair of disc bodies 10 shown in Fig. 7, for example, the fastening procedure of the pair of disc bodies 10 shown in Fig. 20 is simple and easily understandable.

Some of the embodiments disclosed in the specification are composed of a plurality of components. These components can be integrated with one another. Conversely, one component can be divided into a plurality of components. Regardless of whether they are integrated or not, it is sufficient for them to achieve the object of the present invention.

Aspects of the present invention are not limited to the above individual embodiments, and include various modifications that can be conceived by those skilled in the art. The effect of the present invention is not limited to the contents described above. Namely, various additions, changes and partial deletions can be made without departing from the conceptual idea and purpose of the present invention derived from the contents defined in the appended claims.

- 1: Brake disc
- 10: Disc body
- 10a: Inner surface
- 10b: Contact surface
- 13: Heat radiating member
- 14: First positioning unit
- 14b: Inclined surface
- 14c: Positioning Surface
- 15: Base part
- 16: First positioning projection
- 17: Through-hole support
- 18: First positioning recess
- 20: Wheel
- 21: Second positioning unit
- 21b: Inclined surface
- 22: Second positioning recess
- 23: Second positioning projection
- 30: Fastening member
- 31: Bolt
- 31a: Head part
- 31b: Shaft part
- 32: Nut
- 40: Bolt through-hole
- 41: Through wall
- 411: Shaft-part accommodation wall
- 42: Through-hole
- 43: First through-hole
- 432: Restriction wall
- 433: Nut accommodation wall
- 44: Second through-hole
- 442: Bolt accommodation wall
- 45: Wheel through-hole
- 100: Wheel with brake disc

## Claims

1. A brake disc (1) comprising a pair of disc bodies (10) each having, on a principal surface thereof,
a plurality of heat radiating members (13) projecting from the principal surface, the pair of disc bodies (10) being configured to sandwich therebetween a wheel (20) for railway vehicle with the heat radiating members (13), and the wheel (20) configured to being provided with a second positioning unit (21), wherein
each of the disc bodies (10) includes a first positioning unit (14) projecting more than the plurality of heat radiating members (13) in a height direction of the heat radiating members (13) or a first positioning unit (14) located nearer to a root part (13b) of the heat radiating member (13) than a distal end (13a) of the plurality of heat radiating members (13) in the height direction of the heat radiating members (13), wherein the first positioning unit (14) is configured to position each of the pair of the disc bodies (10) with respect to the wheel (20) by being engageable with the second positioning unit (21);
**characterised in that**
the first positioning unit (14) includes a side surface having a pair of flat surfaces (16a) opposed to each other, and a pair of curved surfaces (16b) connecting the pair of flat surfaces (16a).

2. A wheel with a brake disc (100) according to claim 1 , further comprising:
a wheel (20) for railway vehicle;
wherein:
the wheel (20) includes a second positioning unit (21) positioning each of the pair of the disc bodies (10) with respect to the wheel (20) by being engaded with the first positioning unit (14); and
the second positioning unit (21) includes a side surface having a pair of flat surfaces (22a) parallel to each other, and a pair of curved surfaces (22b) connecting the pair of flat surfaces (22a).

3. The wheel with brake disc (100) according to claim 2, wherein:
the first positioning unit (14) has a base part (15) having the same height as that of the heat radiating members (13) in the height direction of the heat radiating members (13), and a first positioning projection (16) or a first positioning recess (18) formed on or in a distal end surface (15a) of the base part (15); and
the second positioning unit (21) has a second positioning recess (22) which is engaged with the first positioning projection (16) or a second positioning projection (23) which is engaged with the first positioning recess (18).

4. The wheel with brake disc (100) according to claim 2 or 3, wherein:
the first positioning unit (14) projects more than the heat radiating members (13) in the height direction of the heat radiating members (13); and
the second positioning recess (22) with which the first positioning unit (14) is engaged is formed in the second positioning unit (21).

5. The wheel with brake disc (100) according to any one of claims 2 to 4, wherein
the first positioning unit (14) provided on one of the pair of disc bodies (10) and the first positioning unit (14) provided on the other differ from each other in position, in a rotation axis direction (d2) of the wheel (20).

6. The wheel with brake disc according to any one of claims 2 to 5, wherein
the first positioning unit (14) and the second positioning unit (21) form a bolt through-hole (40) into which a bolt (31) is inserted, the bolt (31) being configured to penetrate the wheel (20) and the pair of disc bodies (10) to fasten the pair of disc bodies (10) with the wheel (20) therebetween.

7. The wheel with brake disc (100) according to claim 6, wherein
at least one of the first positioning unit (14) and the second positioning unit (21) has an inclined surface (14b, 21b) inclined in an insertion direction of the bolt (31).

8. The wheel with brake disc (100) according to claim 6 or 7, wherein:
the pair of disc bodies (10) are fastened to each other by the bolt (31), and a nut (32) screwed on a shaft part of the bolt (31);
one and the other of the pair of disc bodies (10) have the same shape with each other;
the bolt through-hole (40) has a first through-hole (43) that is formed in one of the pair of disc bodies (10) and is partially provided with a restriction wall (432) that restricts rotation of the nut (32), and a second through-hole (44) that is formed in the other of the pair of disc bodies (10) and is partially provided with a bolt accommodation wall (442) that rotatably accommodates a head part (31a) of the bolt (31);
the first through-hole (43) and the second through-hole (44) are alternately formed in each of the pair of disc bodies (10) on a circumference about a rotation axis (A1) of the wheel (20); and
the first through-hole (43) is formed in the first positioning unit (14) in both of the pair of disc bodies (10), or the second through-hole (44) is formed in the first positioning unit (14) in both of the pair of disc bodies (10).

9. The wheel with brake disc (100) according to any one of claims 2 to 8, wherein
a contact surface between the first positioning unit (14) and the second positioning unit (21) defines an angle 75° or more and 105° or less with respect to a rotation direction (d1) of the wheel (20).

## Patentansprüche

1. Bremsscheibe (1), die ein Paar Scheibenkörper (10) umfasst, die jeweils auf einer Hauptoberfläche davon eine Vielzahl von wärmeabstrahlenden Elementen (13) aufweisen, die von der Hauptoberfläche vorstehen, wobei das Paar Scheibenkörper (10) so konfiguriert ist, dass dazwischen ein Rad (20) für ein Schienenfahrzeug mit den wärmeabstrahlenden Elementen (13) angeordnet ist, und das Rad (20) so konfiguriert ist, dass es mit einer zweiten Positionierungseinheit (21) versehen ist, wobei
jeder der Scheibenkörper (10) eine erste Positionierungseinheit (14) enthält, die in einer Höhenrichtung der Wärmestrahlungselemente (13) weiter als die Mehrzahl von Wärmestrahlungselementen (13) vorsteht, oder eine erste Positionierungseinheit (14), die in der Höhenrichtung der Wärmestrahlungselemente (13) näher an einem Basisteil (13b) des Wärmestrahlungselements (13) angeordnet ist als ein distales Ende (13a) der Mehrzahl von Wärmestrahlungselementen (13), wobei die erste Positioniereinheit (14) so konfiguriert ist, dass sie jeden des Paares der Scheibenkörper (10) in Bezug auf das Rad (20) positioniert, indem sie mit der zweiten Positioniereinheit (21) in Eingriff gebracht werden kann;
**dadurch gekennzeichnet, dass**
die erste Positioniereinheit (14) eine Seitenfläche mit einem Paar flacher Oberflächen (16a), die einander gegenüberliegen, und ein Paar gekrümmter Oberflächen (16b), die das Paar flacher Oberflächen (16a) verbinden, aufweist.

2. Rad mit einer Bremsscheibe (100) nach Anspruch 1, ferner umfassend:
ein Rad (20) für ein Schienenfahrzeug;
wobei: das Rad (20) eine zweite Positioniereinheit (21) aufweist, die jeden des Paares der Scheibenkörper (10) in Bezug auf das Rad (20) positioniert, indem sie mit der ersten Positioniereinheit (14) in Eingriff steht;
und die zweite Positioniereinheit (21) eine Seitenfläche mit einem Paar flacher Flächen (22a), die parallel zueinander sind, und ein Paar gekrümmter Flächen (22b), die das Paar flacher Flächen (22a) verbinden, aufweist.

3. Rad mit Bremsscheibe (100) nach Anspruch 2, wobei:
die erste Positionierungseinheit (14) ein Basisteil (15) mit der gleichen Höhe wie die der wärmeabstrahlenden Elemente (13) in der Höhenrichtung der wärmeabstrahlenden Elemente (13) und einen ersten Positionierungsvorsprung (16) oder eine erste Positionierungsaussparung (18) aufweist, die auf oder in einer distalen Endfläche (15a) des Basisteils (15) ausgebildet ist; und
die zweite Positionierungseinheit (21) eine zweite Positionierungsaussparung (22) aufweist, die mit dem ersten Positionierungsvorsprung (16) in Eingriff steht oder einen zweiten Positionierungsvorsprung (23), der mit der ersten Positionierungsausnehmung (18) in Eingriff steht.

4. Rad mit Bremsscheibe (100) nach Anspruch 2 oder 3, wobei:
die erste Positioniereinheit (14) in Höhenrichtung der Wärmestrahlerelemente (13) weiter vorsteht als die Wärmestrahlerelemente (13); und
die zweite Positionierungsaussparung (22), in die die erste Positioniereinheit (14) eingreift, in der zweiten Positioniereinheit (21) ausgebildet ist.

5. Rad mit Bremsscheibe (100) nach einem der Ansprüche 2 bis 4, wobei
die erste Positioniereinheit (14), die an einem der beiden Scheibenkörper (10) vorgesehen ist, und die erste Positioniereinheit (14), die an dem anderen vorgesehen ist, sich in einer Drehachsenrichtung (d2) des Rades (20) in ihrer Position voneinander unterscheiden.

6. Rad mit Bremsscheibe nach einem der Ansprüche 2 bis 5, wobei
die erste Positioniereinheit (14) und die zweite Positioniereinheit (21) ein Bolzen-Durchgangsloch (40) bilden, in das ein Bolzen (31) eingesetzt ist, wobei der Bolzen (31) dazu ausgebildet ist, das Rad (20) und das Scheibenkörperpaar (10) zu durchdringen, um das Scheibenkörperpaar (10) mit dem Rad (20) dazwischen zu befestigen.

7. Rad mit Bremsscheibe (100) nach Anspruch 6, wobei
mindestens eine von der ersten Positioniereinheit (14) und der zweiten Positioniereinheit (21) eine geneigte Fläche (14b, 21b) aufweist, die in einer Einsatzrichtung des Bolzens (31) geneigt ist.

8. Rad mit Bremsscheibe (100) nach Anspruch 6 oder 7, wobei:
das Paar von Scheibenkörpern (10) durch den Bolzen (31) und eine auf einen Schaftteil des Bolzens (31) aufgeschraubte Mutter (32) aneinander befestigt sind;
der eine und der andere des Paares von Scheibenkörpern (10) die gleiche Form miteinander haben;
das Bolzendurchgangsloch (40) ein erstes Durchgangsloch (43) aufweist, das in einem der beiden Scheibenkörper (10) ausgebildet und teilweise mit einer Begrenzungswand (432) versehen ist, die die Drehung der Mutter (32) einschränkt, und ein zweites Durchgangsloch (44), das in dem anderen der beiden Scheibenkörper (10) ausgebildet und teilweise mit einer Bolzenaufnahmewand (442) versehen ist, die einen Kopfteil (31a) des Bolzens (31) drehbar aufnimmt;
das erste Durchgangsloch (43) und das zweite Durchgangsloch (44) abwechselnd in jedem der beiden Scheibenkörper (10) auf einem Umfang um eine Drehachse (Al) des Rades (20) ausgebildet sind; und
das erste Durchgangsloch (43) in der ersten Positionierungseinheit (14) in beiden Scheibenkörperpaaren (10) ausgebildet ist, oder das zweite Durchgangsloch (44) in der ersten Positionierungseinheit (14) in beiden Scheibenkörperpaaren (10) ausgebildet ist.

9. Rad mit Bremsscheibe (100) nach einem der Ansprüche 2 bis 8, wobei
eine Kontaktfläche zwischen der ersten Positioniereinheit (14) und der zweiten Positioniereinheit (21) einen Winkel von 75° oder mehr und 105° oder weniger in Bezug auf eine Drehrichtung (d1) des Rades (20) definiert.

## Revendications

1. Disque de frein (1) comprenant une paire de corps de disque (10) ayant chacun, sur une surface principale de celui-ci, une pluralité d'éléments rayonnant de la chaleur (13) faisant saillie à partir de la surface principale, la paire de corps de disque (10) étant configurée pour enserrer entre celle-ci une roue (20) pour véhicule ferroviaire avec les éléments rayonnant de la chaleur (13), et la roue (20) étant configurée pour être pourvue d'une seconde unité de positionnement (21), dans lequel
chacun des corps de disque (10) comporte une première unité de positionnement (14) faisant davantage saillie que la pluralité d'éléments rayonnant de la chaleur (13) dans une direction de hauteur des éléments rayonnant de la chaleur (13) ou une première unité de positionnement (14) située plus près d'une partie racine (13b) de l'élément rayonnant de la chaleur (13) que d'une extrémité distale (13a) de la pluralité d'éléments rayonnant de la chaleur (13) dans la direction de hauteur des éléments rayonnant de la chaleur (13), dans lequel la première unité de positionnement (14) est configurée pour positionner chaque corps de la paire des corps de disque (10) par rapport à la roue (20) en pouvant venir en prise avec la seconde unité de positionnement (21) ;
**caractérisé en ce que**
la première unité de positionnement (14) comporte une surface latérale ayant une paire de surfaces plates (16a) opposées l'une à l'autre, et une paire de surfaces incurvées (16b) reliant la paire de surfaces plates (16a).

2. Roue avec un disque de frein (100) selon la revendication 1, comprenant en outre :
une roue (20) pour véhicule ferroviaire ;
dans laquelle :
la roue (20) comporte une seconde unité de positionnement (21) positionnant chaque corps de la paire des corps de disque (10) par rapport à la roue (20) en venant en prise avec la première unité de positionnement (14) ; et
la seconde unité de positionnement (21) comporte une surface latérale ayant une paire de surfaces plates (22a) parallèles l'une à l'autre, et une paire de surfaces incurvées (22b) reliant la paire de surfaces plates (22a).

3. Roue avec disque de frein (100) selon la revendication 2, dans laquelle :
la première unité de positionnement (14) a une partie de base (15) ayant la même hauteur que celle des éléments rayonnant de la chaleur (13) dans la direction de hauteur des éléments rayonnant de la chaleur (13), et une première saillie de positionnement (16) ou un premier évidement de positionnement (18) formé sur ou dans une surface d'extrémité distale (15a) de la partie de base (15) ; et
la seconde unité de positionnement (21) comporte un second évidement de positionnement (22) qui est en prise avec la première saillie de positionnement (16) ou une seconde saillie de positionnement (23) qui est en prise avec le premier évidement de positionnement (18).

4. Roue avec disque de frein (100) selon la revendication 2 ou 3, dans laquelle :
la première unité de positionnement (14) fait davantage saillie que les éléments rayonnant de la chaleur (13) dans la direction de hauteur des éléments rayonnant de la chaleur (13) ; et
le second évidement de positionnement (22) avec lequel la première unité de positionnement (14) est en prise est formé dans la seconde unité de positionnement (21).

5. Roue avec disque de frein (100) selon l'une quelconque des revendications 2 à 4, dans laquelle
la première unité de positionnement (14) disposée sur l'un de la paire de corps de disque (10) et la première unité de positionnement (14) disposée sur l'autre diffèrent l'une de l'autre en termes de position, dans une direction d'axe de rotation (d2) de la roue (20).

6. Roue avec disque de frein selon l'une quelconque des revendications 2 à 5, dans laquelle
la première unité de positionnement (14) et la seconde unité de positionnement (21) forment un trou traversant pour boulon (40) dans lequel un boulon (31) est inséré, le boulon (31) étant configuré pour pénétrer dans la roue (20) et la paire de corps de disque (10) pour fixer la paire de corps de disque (10) avec la roue (20) entre ceux-ci.

7. Roue avec disque de frein (100) selon la revendication 6, dans laquelle
au moins l'une de la première unité de positionnement (14) et de la seconde unité de positionnement (21) présente une surface inclinée (14b, 21b) inclinée dans une direction d'insertion du boulon (31).

8. Roue avec disque de frein (100) selon la revendication 6 ou 7, dans laquelle :
les corps de la paire de corps de disque (10) sont fixés l'un à l'autre par le boulon (31), et un écrou (32) vissé sur une partie arbre du boulon (31) ;
l'un et l'autre de la paire de corps de disque (10) ont mutuellement la même forme ;
le trou traversant pour boulon (40) a un premier trou traversant (43) qui est formé dans l'un de la paire de corps de disque (10) et est partiellement pourvu d'une paroi de restriction (432) qui limite la rotation de l'écrou (32), et un second trou traversant (44) qui est formé dans l'autre de la paire de corps de disque (10) et est partiellement pourvu d'une paroi d'accueil de boulon (442) qui accueille en rotation une partie tête (31a) du boulon (31) ;
le premier trou traversant (43) et le second trou traversant (44) sont formés alternativement dans chacun de la paire de corps de disque (10) sur une circonférence autour d'un axe de rotation (A1) de la roue (20) ; et
le premier trou traversant (43) est formé dans la première unité de positionnement (14) dans les deux corps de la paire de corps de disque (10), ou le second trou traversant (44) est formé dans la première unité de positionnement (14) dans les deux corps de la paire de corps de disque (10).

9. Roue avec disque de frein (100) selon l'une quelconque des revendications 2 à 8, dans laquelle
une surface de contact entre la première unité de positionnement (14) et la seconde unité de positionnement (21) définit un angle de 75° ou plus et de 105° ou moins par rapport à une direction de rotation (d1) de la roue (20).
